(19) Europäisches Patentamt
European Patent Office
Office européen des brevets

(11) **EP 3 236 328 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(51) Int Cl.:
***G05B 23/02*** *(2006.01)*

(21) Anmeldenummer: **16166507.0**

(22) Anmeldetag: **21.04.2016**

(54) **VERFAHREN ZUR ANALYSE DER DRUCKLUFTVERSORGUNGSSICHERHEIT EINER DRUCKLUFTANLAGE**

METHOD FOR ANALYSING THE COMPRESSED AIR SUPPLY SECURITY OF A COMPRESSED AIR INSTALLATION

PROCEDE D'ANALYSE DE LA SECURITE D'ALIMENTATION EN AIR COMPRIME D'UNE INSTALLATION A AIR COMPRIME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.10.2017 Patentblatt 2017/43**

(73) Patentinhaber: **Kaeser Kompressoren SE**
**96450 Coburg (DE)**

(72) Erfinder:
• **Wagner, Florian**
**95460 Coburg (DE)**
• **Foerster, Andreas**
**96450 Coburg (DE)**

(74) Vertreter: **Zech, Stefan Markus et al**
**Meissner Bolte Patentanwälte**
**Rechtsanwälte Partnerschaft mbB**
**Postfach 86 06 24**
**81633 München (DE)**

(56) Entgegenhaltungen:
**EP-A2- 1 995 140      DE-A1-102008 064 491**
**DE-B3-102011 012 558    US-A- 5 297 381**

EP 3 236 328 B1

**Beschreibung**

Die Erfindung betrifft ein Verfahren zur Analyse der Druckluftversorgungssicherheit einer Druckluftanlage, die einen oder mehrere Drucklufterzeuger umfasst und über ein Druckluftnetzwerk ein oder mehrere Druckluftverbraucher beliefert, wobei ein zeitlicher Verlauf des maximalen Liefervolumenstroms erfasst, abgeschätzt oder errechnet wird, wobei ein zeitlicher Verlauf des Verbrauchsvolumenstroms erfasst, abgeschätzt oder errechnet wird und wobei zur Analyse der Druckluftversorgungssicherheit der zeitliche Verlauf des maximalen Liefervolumenstroms und der zeitliche Verlauf des Verbrauchsvolumenstroms über mehrere Zeitpunkte automatisch miteinander verrechnet werden, nach den Merkmalen des Anspruchs 1. Weiterhin wird ein Verfahren zur Steuerung einer Druckluftanlage mit den Merkmalen des Anspruchs 20 angegeben.

Industrielle Druckluftanlagen werden betrieben, um verdichtete Luft zum Betrieb von Prozessen und Maschinen zur Verfügung zu stellen. Hierbei umfasst die Druckluftanlage typischerweise ein oder mehrere Drucklufterzeuger. Über ein Druckluftnetzwerk sind ein oder mehrere Druckluftverbraucher an die Druckluftanlage angeschlossen, und werden mit Druckluft beliefert. Eine Druckluftanlage umfasst typischerweise meist weiterhin Komponenten der Druckluftaufbereitung (z.B. Filter, Kondensatabscheider, Trockner, etc.), Druckluftspeicher sowie weitere Komponenten, wie Rohrleitungen, Ventile,etc.. Die konkrete Ausführung einer Druckluftanlage ist abhängig von der beabsichtigten Anwendung. Sowohl die Art der verwendeten Komponenten, wie Kompressoren, Druckluftaufbereitungskomponenten (Filter, Kondensatabscheider, Trockner, etc.), Druckluftspeicher als auch die Struktur der Vernetzung (der Verrohrung) kann stark variieren. Es bestehen diesbezüglich keine standardisierten Konfigurationen und Strukturen. Festhalten lässt sich allerdings, dass in der Regel mehrere Drucklufterzeuger in Parallelschaltung ggf. auch in Hintereinanderschaltung vorgesehen sind, wobei hinsichtlich der Drucklufterzeugung eine gewisse Redundanz vorgesehen wird.

Typischerweise wirkt die Druckluftanlage mit einer übergeordneten Steuerung (Anlagensteuerung) zusammen. Diese kann direkt an oder in der Druckluftanlage bzw. der Druckluftanlage konkret zugeordnet vorgesehen sein. Es kann aber auch eine übergeordnete Steuerung, die neben der Druckluftanlage auch weitere technische Anlagen und Komponenten steuert, vorgesehen sein. Aufgabe der Anlagensteuerung ist es, insbesondere über Last- bzw. Nicht-Last-Befehle und ggf. einer Drehzahlvorgabe für die einzelnen Drucklufterzeuger die gesamte Druckluftanlage so zu steuern, dass die vom Betreiber der Druckluftanlage vorgegebenen Grenzen, nämlich einerseits ein vorgegebener Bedarfsdruck als untere Grenze und andererseits eine Druckspielraumgrenze als obere Grenze eingehalten werden.

Das Einhalten der oben genannten vorgegebenen Druckgrenzen bedeutet implizit, dass im zeitlichen Mittel von den Drucklufterzeugern die Menge an Druckluft erzeugt wird, die von den Druckluftverbrauchern benötigt wird. Auf einen Zeitpunkt bezogene Differenzen zwischen Liefervolumenstrom und von den Druckluftverbrauchern abgenommenen Verbrauchsvolumenstrom äußern sich in Änderungen des Netzdrucks. Änderungen des Netzdrucks stellen grundsätzlich weder für die Druckluftanlage noch für die Druckluftverbraucher ein Problem dar, sofern die vorgegebenen Druckgrenzen eingehalten werden. Dass der Netzdruck nicht konstant gehalten werden muss, nutzt die Anlagensteuerung als Freiheitsgrad, um insbesondere hinsichtlich Energie, Wartung, Verschleiß, etc. Optimierungen durchzuführen.

Dass Änderungen im Netzdruck nicht sofort zu einer Verletzung der vorgegebenen Druckgrenzen führen, liegt an den in der Druckluftanlage und im Druckluftnetzwerk vorhandenen Speicherbehältern und Leitungsvolumina (d.h. den Volumina der Leitungen), welche insgesamt das sog. wirksame Puffervolumen V definieren. Das wirksame Puffervolumen V bestimmt, in welchem Maße sich Differenzen zwischen Liefervolumenstrom DVF(t) und Verbrauchsvolumenstrom CVF(t) in Druckänderungen, d.h. in Änderungen des Netzdrucks äußern. Hierbei gilt: Je größer das wirksame Puffervolumen V, desto geringer die Änderungsrate des Netzdrucks (bei ansonsten gleichen Bedingungen). Gleichzeitig kann das wirksame Puffervolumen V, vergleichbar mit einem Akku, als Abnehmer und Lieferant für Druckluft aufgefasst werden. Zuviel erzeugte Druckluft wird im wirksamen Puffervolumen gespeichert und kann zu späteren Zeitpunkten dafür verwendet werden, einen bezogen auf den aktuellen Verbrauchsvolumenstrom CVF(t) zu geringen Liefervolumenstrom DVF(t) der Drucklufterzeuger durch Druckluft aus dem wirksamen Puffervolumen V zu ergänzen.

Als Kenngröße für den Druckluftbedarf der Druckluftverbraucher dient der Verbrauchsvolumenstrom CVF(t). Der Gesamtbedarf aller Druckluftverbraucher ergibt durch die Überlagerung (Addition) der jeweiligen Einzelbedarfe den jeweiligen Verbrauchsvolumenstrom CVF(t). Der konkrete Betrieb der angeschlossenen Verbraucher ist meist nicht zeitlich synchronisiert, so dass sich in Summe ein variierender Druckluftbedarf ergibt. Werden in einem Druckluftnetzwerk viele kleine, unsynchronisierte Druckluftverbraucher betrieben, kann gut von einem mittleren Verbrauch ausgegangen werden. Wenige große, unsynchronisierte Druckluftverbraucher führen tendenziell zu großen Schwankungen des Verbrauchsvolumenstroms CVF(t).

Je nach Art des zu versorgenden Prozesses oder der zu versorgenden Maschinen als Druckluftverbraucher sind seitens der Druckluftanlage unterschiedliche Anforderungen zu gewährleisten. Typische Anforderungen sind z.B. Druckluftqualität (Partikelgehalt, chemische Reinheit, usw.), Einhaltung eines Mindestdrucks oder Deckung eines Verbrauchsvolumenstroms CVF(t). Der Verbrauchsvolumenstrom CVF(t) wird durch die Summe aller Druckluftbedarfe aller potentiell gleichzeitig im Betrieb befindlichen Druckluftverbraucher bestimmt. In der Regel sind alle Anforderungen gleichzeitig und dauerhaft während des Betriebs der Druckluftanlage einzuhalten.

Druckluftanlagen werden üblicherweise mit einer Redundanz bezüglich des Liefervolumenstroms (Lieferreserve) ausgelegt, um bei Nichtverfügbarkeit von Drucklufterzeugern (z.B. aufgrund von Wartungsmaßnahmen) den Druckluftbedarf mit hoher Wahrscheinlichkeit dennoch decken zu können. Solange der Verbrauchsvolumenstrom CVF(t) sich so verhält, wie bei der Planung der Druckluftanlage angenommen, kann auch bei Nichtverfügbarkeit von Drucklufterzeugern die benötigte Menge an Druckluft produziert werden. In der Regel ändert sich der Verbrauchsvolumenstrom CVF(t) jedoch über die Monate bzw. Jahre des Betriebs einer Druckluftanlage, bedingt durch Änderungen im mit Druckluft versorgten Prozess, z.B. durch Erweiterung des durch Druckluft versorgten Maschinenparks in einer Produktionsanlage. Hierdurch wird die Redundanz des Liefervolumenstroms DVF (Lieferreserve) mit der Zeit reduziert bzw. aufgezehrt. Dies bleibt oftmals über lange Zeit unerkannt, da bei störungsfreiem Betrieb der Drucklufterzeuger der Verbrauchsvolumenstrom CVF(t) stets gedeckt werden kann. Erst bei Nichtverfügbarkeit eines Drucklufterzeugers zu einem ungünstigen Zeitpunkt (z.B. Ausfall eines vergleichsweise großen Drucklufterzeugers bei voll ausgelastetem Maschinenpark) fällt auf, dass eine Lieferreserve nicht mehr gegeben ist und die erforderliche Menge an Druckluft nicht mehr produziert werden kann. In diesem Fall kommt es zu Druckunterschreitungen (d.h. zu Unterschreitungen des Bedarfsdrucks) und in der Konsequenz zu Problemen im mit Druckluft versorgtem Prozess.

Gegenwärtiger Stand der Technik ist, dass die Überdimensionierung bei der Planung einer Druckluftanlage dadurch erreicht wird, dass man in einem ersten Schritt einen Mindestliefervolumenstrom festlegt, den die Druckluftanlage auch dann noch erzeugen können muss, wenn, bezogen auf das angenommene Schlechtfallszenario, ein oder mehrere Drucklufterzeuger nicht zur Verfügung stehen. Je nachdem, welche Relevanz die Druckluft für den mit Druckluft versorgten Prozess besitzt, werden hierbei also die Ausfälle keines, eines oder sogar mehrerer Drucklufterzeuger berücksichtigt. Die Auswahl und Konfiguration der Drucklufterzeuger in der Druckluftanlage muss in der Planung dann so erfolgen, dass der maximale Liefervolumenstrom MDVF(t) im definierten Schlechtfall noch immer über den Mindestliefervolumenstrom liegt. Um zukünftige Steigerungen des Verbrauchsvolumenstroms CVF(t) abdecken zu können, wird bei der Festlegung des Mindestliefervolumenstroms nicht der unmittelbar nach Inbetriebnahme einer Druckluftanlage erwartete maximale Verbrauchsvolumenstrom, sondern ein etwas höherer Wert berücksichtigt. So wird oft von einer Überdimensionierung einer Druckluftanlage bei Neuplanung von 10 bis 20 % ausgegangen. Eine häufige Praxis für ein definiertes Schlechtfallszenario ist, dass der Drucklufterzeuger mit dem größten Liefervolumenstrom bei voll ausgelastetem Maschinenpark bzw. voller Druckluftabnahme nicht zur Verfügung steht.

Wie bereits erwähnt, kann eine Sicherheitsreserve allerdings schleichend aufgezehrt werden bzw. es kann mit der Zeit die Gefahr von Druckunterschreitungen entstehen, die zunächst unerkannt bleiben.

DE102011012558 beschreibt ein Druckluft Wartungsgerät und eine Verbrauchersteuervorrichtung. Die Aufgabe der vorliegenden Erfindung besteht darin, ein Verfahren anzugeben, bei dem die Druckluftversorgungssicherheit einer Druckluftanlage noch besser gewährleistet ist.

Eine Kernüberlegung des erfindungsgemäßen Verfahrens besteht darin, durch eine Verrechnung eines zeitlichen Verlaufs des Verbrauchsvolumenstroms CVF(t) mit einem zeitlichen Verlauf eines maximalen Liefervolumenstroms MDVF(t) festzustellen, ob die Druckluftversorgungssicherheit einer Druckluftanlage zu jedem Zeitpunkt mit ausreichender Sicherheit gegeben ist, d.h. ob der Verlauf des Verbrauchsvolumenstroms innerhalb eines analysierten Zeitbereichs abgedeckt werden kann. Hierbei können Ermittlung des Verbrauchsvolumenstroms CVF(t) und/oder Ermittlung des maximalen Liefervolumenstroms MDVF(t) automatisiert erfolgen. Die Verrechnung zur Analyse der Druckluftversorgungssicherheit erfolgt in allen erfindungsgemäßen Ausführungen automatisiert. Automatisiert bedeutet, dass dieser Schritt ohne Zwischenschaltung menschlicher Handlungen abläuft.

In anderen Worten: Unter Druckluftversorgungssicherheit wird die Eigenschaft einer Druckluftanlage verstanden, dass die Druckluftverbraucher in einem betrachteten Zeitraum stets den benötigten Verbrauchsvolumenstrom erhalten können. In einer noch engeren Definition des Begriffs der "Druckluftversorgungssicherheit" darf dabei auch nicht der festgelegte Bedarfsdruck unterschritten werden.

Das erfindungsgemäße Verfahren zur Analyse der Druckluftversorgungssicherheit einer Druckluftanlage, die einen oder mehrere Drucklufterzeuger umfasst und über ein Druckluftnetzwerk oder mehrere Druckluftverbraucher beliefert, sieht vor, dass ein zeitlicher Verlauf des maximalen Liefervolumenstroms MDVF(t) erfasst, abgeschätzt oder errechnet wird, dass ein zeitlicher Verlauf des Verbrauchsvolumenstroms CVF(t) erfasst, abgeschätzt oder errechnet wird, und dass zur Analyse der Druckluftversorgungssicherheit der zeitliche Verlauf des maximalen Liefervolumenstroms MDVF(t) und der zeitliche Verlauf des Verbrauchsvolumenstroms CVF(t) über einen Analysezeitraum automatisch miteinander verrechnet werden.

Der Analysezeitraum kann dabei insbesondere durch manuelle Eingabe oder auf andere Weise vorgegeben werden. Ein Analysezeitraum kann aber auch automatisch, beispielsweise durch andere Programmroutinen festgelegt werden. Denkbar ist auch, dass ein Analysezeitraum als wanderndes Zeitfenster insbesondere zyklisch oder kontinuierlich verschoben wird. Der Analysezeitraum kann beispielsweise aber auch die gesamte Laufzeit einer Druckluftanlage umfassen. Insgesamt sind obere und untere Grenzen eines Analysezeitraums beliebig festlegbar. Denkbar ist schließlich auch, dass nicht nur ein einziger Analysezeitraum, sondern mehrere Analysezeiträume in die Analyse eingehen.

Das erfindungsgemäße Verfahren kann zyklisch, ereignisgetrieben und/oder einmalig ausgeführt werden. Abstrakt lässt sich das Verfahren auch wie folgt darstellen, wobei die Schritte 2, 3 und 4 optional sind.

Schritt 1: Analyse der zeitlichen Verläufe des maximalen Liefervolumenstroms im DVF(t) und des Verbrauchsvolumenstroms CVF(t) unter Verrechnung beider Ströme miteinander

Schritt 2: Bewertung des Analyseergebnisses

Schritt 3: Ermittlung geeigneter Verbesserungsmaßnahmen

Schritt 4: Umsetzungsschritt

Der Analysezeitraum kann vollständig oder teilweise in der Vergangenheit liegen (retrospektive Analyse), der analysierte Zeitraum kann aber auch vollständig oder teilweise in der Zukunft liegen (prospektive Analyse). Bei einer retrospektiven Analyse stehen häufige direkte oder indirekte Messwerte für den Verlauf des Verbrauchsvolumenstroms CVF(t) zur Verfügung. Direkte Messwerte stellen unmittelbar den Verlauf des Verbrauchsvolumenstroms CVF(t) dar. Indirekte Messwerte, wie z.B. der Netzdruck p(t) und der tatsächliche Liefervolumenstrom DVF(t), erlauben es, insbesondere über Rechenmodelle den nicht direkt gemessenen Verlauf des Verbrauchsvolumenstroms CVF(t) herzuleiten.

Der zeitliche Verlauf des maximalen Liefervolumenstroms MDVF(t) basiert hingegen nicht auf direkt oder indirekt erfassten Messwerten, sondern ist ein theoretischer Verlauf, der auf einer Annahme basiert, welche Drucklufterzeuger (real bereits vorhanden oder in zukünftigen Varianten oder innerhalb einer Planung einer Druckluftanlage im Analysezeitraumunter Zugrundelegung eines möglichen Szenarios ggf. angenommen oder tatsächlich eingetroffen) zu einer bestimmten Zeit zur Verfügung stehen. Drucklufterzeuger, die zu einem Zeitpunkt und/oder in einem Zeitraum nicht zur Verfügung stehen, leisten zu diesem Zeitpunkt/in diesem Zeitraum keinen Beitrag zum maximalen Liefervolumenstrom MDVF(t), d.h. sie werden bei der Bestimmung des maximalen Liefervolumenstroms MDVF(t) nicht berücksichtigt.

Bei einer prospektiven Analyse stehen für den Analysezeitraumin der Zukunft noch keine konkreten Messwerte für den maximalen Liefervolumenstrom MDVF(t) und den Verlauf des Verbrauchsvolumenstroms CVF(t) zur Verfügung. In diesem Fall können prognostizierte bzw. erwartete Werte des Verbrauchsvolumenstroms herangezogen werden. Diese können beispielsweise auf Messwerten eines repräsentativen Zeitraums in der Vergangenheit basieren, sie können aber auch rein auf geschätzten oder berechneten Werten basieren.

In einer bevorzugten Ausgestaltung werden zur Analyse der Druckluftversorgungssicherheit im Analysezeitraum an einer Vielzahl von, insbesondere aufeinanderfolgenden Zeitpunkten $t_0$, ..., $t_i$, ... eine Differenzbildung von maximalem Liefervolumenstrom MDVF(t) und aktuellem Verbrauchsvolumenstrom CVF(t) vorgenommen und in der Analyse berücksichtigt. Die Differenzbildung kann dabei insbesondere nach der Formel DVFE(t) = MDVF(t) - CVF(t) vorgenommen werden.

In einer besonders bevorzugten Weiterbildung des erfindungsgemäßen Verfahrens wird zur Analyse der Druckluftversorgungssicherheit ein Liefervolumenstromüberschuss DVFE(t) über eine oder mehrere bestimmte Zeitspannen integriert, wobei DVFE(t) = MDVF(t) - CVF(t) ist.

In einer weiteren vorteilhaften Ausführungsform des erfindungsgemäßen Verfahrens wird bei der Analyse der Druckluftversorgungssicherheit zusätzlich auch das wirksame Puffervolumen V bzw. die im wirksamen Puffervolumen V abspeicherbare maximale Reserve $R_{MAX}$ berücksichtigt. Als Vereinfachung des wirksamen Puffervolumens kann auch das dezidiert vorgesehene bzw. vorhandene Speichervolumen als Näherungswert angesetzt werden. Die Berücksichtigung des wirksamen Puffervolumens kann insbesondere durch Integration des Liefervolumenstromüberschusses DVFE(t) über der Zeit erfolgen, wobei die durch die Differenz zwischen Druckspielraumgrenze UPL und Bedarfsdruck LPL definierte maximale Speicherkapazität des wirksamen Puffervolumens V berücksichtigt wird. Das Ergebnis ist der zeitliche Verlauf der Reserve R(t). Die Reserve R(t) ist die zum Zeitpunkt t im wirksamen Puffervolumen V gespeicherte Druckluft. Die Reserve R(t) ist an den Netzdruck p(t) gekoppelt. Es gilt, je höher der Netzdruck p(t), desto größer die Reserve R(t), wobei die Reserve R(t) nach oben durch die Druckspielraumgrenze UPL begrenzt ist. Liegt der Netzdruck p(t) auf dem Bedarfsdruck LPL, so ist die Reserve R aufgebraucht. Fällt der Netzdruck p(t) unter den Bedarfsdruck LPL, so wird der Wert der Reserve R(t) negativ. In der Praxis bedeutet dies, dass der Druckluftbedarf der Druckluftverbraucher nicht mehr zu jedem Zeitpunkt im analysierten Zeitintervall gedeckt werden kann. Im Gegensatz zum Liefervolumenstromüberschuss DVFE ist die Reserve nicht ein Volumenstrom, sondern ein Integral eines Volumenstroms über der Zeit, also ein Volumen.

In einer vorteilhaften Ausführung geschieht die Verrechnung derart, dass für die Deckung des Druckluftbedarfs der maximale Liefervolumenstrom MDVF(t) der Drucklufterzeuger und die Menge der im wirksamen Puffervolumen V gespeicherten Druckluft berücksichtigt werden.

Hierbei wird für die Verrechnung angenommen, dass der Verbrauchsvolumenstrom CVF(t) primär durch den Liefervolumenstrom DVFE der Drucklufterzeuger und nur sekundär durch im wirksamen Puffervolumen V gespeicherte Luft (Reserve R) gedeckt wird. Hiermit soll folgender Effekt erzielt werden:

- Ist zu einem Zeitpunkt t der Liefervolumenstromüberschuss DVFE positiv, so wird der Liefervolumenstromüberschuss DVFE zum Speichern von Luft im wirksamen Puffervolumen V verwendet. Die im wirksamen Puffervolumen V gespeicherte Menge an Druckluft steigt, sofern das wirksame Puffervolumen V noch nicht maximal mit Druckluft gefüllt ist (Die Reserve R(t) also noch nicht den maximalen Wert $R_{MAX}$ angenommen hat). Andernfalls verbleibt die im wirksamen Puffervolumen V gespeicherte Druckluftmenge auf den maximal zulässigen Wert ($R_{MAX}$).

- Ist zu einem Zeitpunkt t der Liefervolumenstromüberschuss DVFE negativ, so wird der Liefervolumenstromüberschuss DVFE, der in diesem Fall als Liefervolumenstromdefizit bezeichnet werden könnte, aus dem wirksamen Puffervolumen V entnommen. Die im wirksamen Puffervolumen V gespeicherte Menge an Druckluft sinkt, sofern überhaupt noch Druckluft im wirksamen Puffervolumen V gespeichert ist.
- Ist zu einem Zeitpunkt t der Liefervolumenstromüberschuss DVFE 0 m³/min, so wird der Druckluftbedarf vollständig mit dem maximalen Liefervolumenstrom MDVF(t) der Drucklufterzeuger gedeckt. Die im wirksamen Puffervolumen V gespeicherte Menge an Druckluft bleibt unverändert.

In einer konkreten Ausführung des erfindungsgemäßen Verfahrens könnte die Berechnung der Reserve R wie folgt durchgeführt werden:

$$\frac{dR(t)}{dt} = \begin{cases} DVFE(t) & ,wenn\ (R(t) < RMAX)\ oder\ DVFE(t) < 0 \\ 0 & ,sonst \end{cases}$$

Mit:

- R(t): Zum Zeitpunkt t im wirksamen Puffervolumen V als Reserve R gespeicherte Druckluft.
- $R_{MAX}$: Die durch die Druckspielraumgrenze und Bedarfsdruck begrenzte Maximalreserve, die man im wirksamen Puffervolumen speichern kann.
- DVFE(t): Der Liefervolumenstromüberschuss zum Zeitpunkt t.
- Für die Berechnung der Reserve R ist für den Beginn des Analysezeitraums (t=0) ein Startwert anzugeben. Dies kann z.B. der Wert $R_{MAX}$ sein (maximale Reserve).

Die Maximalreserve $R_{MAX}$ wird wie folgt bestimmt.

$$R_{MAX} = \frac{UPL - LPL}{AP} * V$$

Mit:

- $R_{MAX}$: Die durch die Druckspielraumgrenze UPL begrenzte maximale Reserve, die man im wirksamen Puffervolumen speichern kann.
- UPL: Die Druckspielraumgrenze (maximal zulässiger Netzdruck als Überdruck).
- LPL: Bedarfsdruck (minimal notwendiger Netzdruck als Überdruck).
- AP: Umgebungsdruck (als Absolutdruck).
- V: wirksames Puffervolumen.

Eine qualitative Aussage über die Überlastung der Druckluftanlage wird nun darüber getroffen, ob Druckluft aus dem wirksamen Puffervolumen V entnommen werden muss und kann, um den Druckluftbedarf zu decken.

- Wird zu keinem Zeitpunkt Druckluft aus dem wirksamen Puffervolumen benötigt, da der maximale Liefervolumenstrom MDVF(t) der Drucklufterzeuger zu jedem Zeitpunkt den Verbrauchsvolumenstrom CVF(t) übersteigt, so ist die Station sicher nicht überlastet.
- Übersteigt der Verbrauchsvolumenstrom CVF(t) zeitweise den maximalen Liefervolumenstrom MDVF(t) der Drucklufterzeuger, reicht aber die im wirksamen Puffervolumen V gespeicherte Menge an Druckluft für den Ausgleich der Differenz vollständig aus, so ist die Druckluftanlage nicht überlastet, da das wirksame Puffervolumen V ausreichend groß dimensioniert ist.
- Übersteigt der Verbrauchsvolumenstrom CVF(t) zeitweise (aber nicht permanent) den maximalen Liefervolumenstrom MDVF(t) der Drucklufterzeuger und reicht die im wirksamen Puffervolumen V gespeicherte Menge an Druckluft nicht aus, um die Differenz vollständig zu decken, so ist die Druckluftanlage zeitweise überlastet, da das wirksame Puffervolumen V nicht ausreichend groß dimensioniert ist und/oder der maximale Liefervolumenstrom MDVF(t) zu klein ist.

- Übersteigt der Verbrauchsvolumenstrom CVF(t) permanent den maximalen Liefervolumenstrom MDVF(t) der Drucklufterzeuger, so ist die Druckluftanlage permanent überlastet. Die permanente Überlastung ist nur auf einen zu kleinen maximalen Liefervolumenstrom MDVF der Druckerzeuger zurückzuführen.

Eine quantitative Aussage über die Überlastung der Druckluftanlage erhält man dadurch, dass man prüft, welche Menge an Druckluft aus dem wirksamen Puffervolumen V entnommen werden muss, um den Druckluftbedarf zu decken.

Vorstehend wurde dargelegt, dass unterschiedliche Stufen einer Überlastungseinschätzung gegeben sind von "sicher nicht überlastet" über "nicht überlastet" über "zeitweise überlastet" bis "permanent überlastet". In einer sehr weiten Definition kann man bereits von einer Überlastung der Druckluftanlage sprechen, wenn Druckluft aus dem wirksamen Puffervolumen V entnommen werden muss, um eine Druckunterschreitung zu vermeiden. Eine engere Definition von "Überlastung", von der auch im Folgenden ausgegangen werden soll, besagt, dass eine Druckluftanlage erst dann überlastet ist, wenn Druckunterschreitungen unvermeidbar sind. Eine derartige Analyse, ob eine Überlastung der Druckluftanlage gegeben ist, kann beispielsweise wie folgt vorgenommen werden:

Zunächst wird eine Analyse des Verlaufs der Reserve R(t) durchgeführt. Immer dann, wenn der maximale Liefervolumenstrom MDVF(t) den Wert des Verbrauchsvolumenstroms CVF(t) zum zugehörigen Zeitpunkt übersteigt, wird die Differenz zwischen maximalem Liefervolumenstrom und Verbrauchsvolumenstrom dazu verwendet, Druckluft im wirksamen Puffervolumen V zu speichern, sofern das wirksame Puffervolumen noch nicht maximal gefüllt ist. Das wirksame Puffervolumen ist dann maximal gefüllt, wenn der Netzdruck p(t) die Druckspielraumgrenze UPL erreicht hat, aber nicht überschreitet. Ist das wirksame Puffervolumen maximal gefüllt, so beträgt die Reserve $R_{MAX}$.

Unterschreitet der maximale Liefervolumenstrom MDVF(t) den Verbrauchsvolumenstrom CVF(t), wird die Differenz zwischen maximalem Liefervolumenstrom und Verbrauchsvolumenstrom durch Druckluft aus dem wirksamen Puffervolumen V kompensiert, sofern noch Druckluft im wirksamen Puffervolumen V gespeichert ist. Ist gerade so viel Druckluft im wirksamen Puffervolumen V gespeichert, dass der Netzdruck p(t) den Wert des Bedarfsdrucks LPL annimmt, aber nicht unterschreitet, so beträgt die Reserve 0 m³ (Nullreserve). Unterschreitet der Netzdruck p(t) den Bedarfsdruck LPL so wird die Reserve R(t) negativ und ist damit aufgezehrt.

Befindet sich der Netzdruck p(t) zwischen Bedarfsdruck LPL und Druckspielraumgrenze UPL sollte die Reserve R(t) entsprechend einen Wert zwischen 0 m³ (Nullreserve) und $R_{MAX}$ annehmen.

In einer einfachen Variante kann man für die Berechnung der Reserve R(t) den Netzdruck p(t) in einen linearen Zusammenhang zum Bedarfsdruck LPL und der Druckspielraumgrenze UPL setzen.

$$R(t) = \frac{p(t) - LPL}{UPL - LPL} * R_{max}$$

Die Verwendung eines linearen Zusammenhangs und das Verknüpfen des Werts von $R_{MAX}$ mit der Druckspielraumgrenze UPL und des Werts von 0 m³ mit dem Bedarfsdruck LPL ist nur beispielhaft zu verstehen. Die Grenzen von 0 m³ (Nullreserve) und $R_{MAX}$ können natürlich anders gesetzt werden und statt eines linearen Zusammenhangs sind auch beliebige andere (nichtlineare) Zusammenhänge denkbar.

Die konkrete quantitative Aussage entsteht dadurch, dass man den minimalen Wert der Reserve für den Betrachtungszeitraum und das untersuchte Szenario ermittelt und in das Verhältnis zur Maximalreserve $R_{MAX}$ setzt, das Verhältnis wird im Folgenden als Reservegrad bezeichnet.

$$RG = \frac{MIN\big(R(t)\big)}{R_{MAX}}$$

Mit:

- RG: Der Reservegrad der Druckluftanlage im jeweiligen Szenario.
- $R_{MAX}$: Die durch die Druckspielraumgrenze UPL begrenzte maximale Reserve, die man im wirksamen Puffervolumen V speichern kann.
- MIN(R (t)): Der zeitliche Minimalwert der Reserve für das jeweilige Szenario.

• Liegt der Reservegrad RG bei 100%, so ist die Druckluftanlage sicher nicht überlastet.
• Liegt der Reservegrad RG zwischen 0% und 100%, so ist die Druckluftanlage dann nicht überlastet, wenn die Druckerzeuger soviel Druckluft produzieren, dass das wirksame Puffervolumen V immer dann ausreichend gefüllt ist, wenn der Verbrauchsvolumenstrom CVF(t) den maximalen Liefervolumenstrom MDVF(t) überschreitet und damit zur Deckung des Verbrauchsvolumenstroms CVF(t) Druckluft aus dem wirksamen Puffervolumen V benötigt wird. Je näher der Reservegrad bei 0% liegt, umso mehr Druckluft muss man im wirksamen Puffervolumen V speichern, um eine Unterschreitung des Bedarfsdrucks LPL zu verhindern.

- Liegt der Reservegrad bei oder unter 0%, so ist die Druckluftanlage überlastet. Es ist unmöglich, ausreichend Druckluft im wirksamen Puffervolumen V zu speichern, um eine Unterschreitung des Bedarfsdrucks LPL verhindern.

Das Ergebnis der Analyse (qualitativ und/oder quantitativ) wird dem Betreiber der Druckluftanlage bekannt gegeben, z.B.

- durch einen Report, der sowohl positive aber auch negative Ergebnisse enthalten kann und unabhängig vom Ergebnis dem Betreiber zugestellt wird
- durch eine Warnmeldung, die dem Betreiber nur dann zugestellt wird, wenn das Ergebnis positiv ausfällt, d.h. eine mögliche Überlastung der Druckluftanlage erkannt wurde.

Im Fall einer vermeidbaren Überlastung könnte der Betreiber daraufhin den in der Verbundsteuerung verwendeten Bedarfsdruck anheben, um den eigentlichen Bedarfsdruck LPL durch Aufbau einer Mindestreserve einhalten zu können. Die quantitative Analyse gibt einem einen Hinweis darauf, um welchen Betrag man den in der Steuerung verwendeten Bedarfsdruck anheben muss.

Im Fall einer unvermeidbaren zeitweisen Überlastung ermittelt das Verfahren beispielsweise folgende Maßnahmen:

- entweder den maximalen Liefervolumenstrom MDVF(t) durch Austausch und/oder Ergänzung von Drucklufterzeugern in der Druckluftanlage erhöhen
- oder das wirksame Puffervolumen V in der Druckluftanlage vergrößern
- oder beides

Im Fall einer unvermeidbaren dauerhaften Überlastung könnte der Betreiber daraufhin den Liefervolumenstrom MDVF(t) im Schlechtfall durch Austausch und/oder Ergänzung von Drucklufterzeugern erhöhen.

Zusätzlich hat der Betreiber der Druckluftanlage ggf. auch noch die Möglichkeit, den Verlauf des Verbrauchsvolumenstrom CVF(t) so zu verändern, dass Spitzen im Verbrauchsvolumenstroms CVF(t) durch zeitliche Verschiebung von Verbrauchsanteilen vermieden werden und damit auch ohne und/oder mit geringeren Änderungen in der Druckluftanlage eine Überlastung vermieden wird.

Bei der Analyse der Druckluftversorgungssicherheit kann in einer bevorzugten Ausgestaltung auch die in wirksamem Puffervolumen V gespeicherte Reserve R(t) berücksichtigt werden.

Das Ergebnis der Analyse der Druckluftversorungssicherheit kann in einer möglichen Ausführungsform auch zur Wartungsterminplanung herangezogen werden, wobei auch die Wartungsterminplanung manuell initiiert oder auch automatisiert vorgenommen werden kann. Durch die erfindungsgemäß vorgeschlagene Analyse der Druckluftversorgungssicherheit über einen bestimmten Zeitraum kann auch prospektiv überprüft werden, in welchem Zeitraum der zeitliche Verlauf des maximalen Liefervolumenstroms sowie der zeitliche Verlauf des Verbrauchsvolumenstroms ggf. unter Berücksichtigung des wirksamen Puffervolumens eine ausreichende Druckluftversorgungssicherheit gewährleisten, selbst wenn bestimmte Komponenten der Druckluftanlage, beispielsweise ein Drucklufterzeuger zu Wartungszwecken außer Betrieb genommen werden müssen. Bevorzugtermaßen berücksichtigt die Wartungsterminplanung gleichzeitig auch die mutmaßliche Dauer der Wartungsmaßnahme und schlägt beispielsweise entsprechende Zeitfenster vor, in der eine anstehende Wartung ohne Gefährdung der Druckluftversorgungsicherheit durchgeführt werden kann.

Eine weitere mögliche ggf. auch zusätzliche Anwendungsmöglichkeit der Ergebnisse der Analyse der Druckluftversorgersicherheit besteht darin, die Ergebnisse dieser Analyse automatisch in einem Steuerungsverfahren der Druckluftanlage eingehen zu lassen bzw. zu berücksichtigen, das den Betrieb der Druckluftanlage steuert. Dadurch wird es möglich, beispielsweise auf den Aufbau einer gezielten Reserve durch Anhebung des Netzdrucks p(t) zu verzichten, wenn der angenommene Verbrauchsvolumenstrom in der prospektierten Zeitspanne der Steuerung bzw. Regelung problemlos durch die zur Verfügung stehenden Drucklufterzeuger produziert werden kann. Dies könnte beispielsweise dann angenommen werden, wenn der in jüngster Zeit und/oder aktuell über einen gewissen Zeitraum und/oder für die nähere Zukunft prognostizierten Verbrauchsvolumenstrom weit unter dem maximalen Liefervolumenstrom MDVF(t) liegt. Bei entsprechender Erhöhung des Verbrauchsvolumenstroms CVF(t) könnte die Anlagensteuerung auch - nach Durchführung des erfindungsgemäßen Verfahrens - festlegen, eine Reserve im wirksamen Puffervolumen aufzubauen. Dabei wäre es zusätzlich denkbar je nach dem Ergebnis der Analyse, die Reserve ganz bis auf $R_{MAX}$ oder nicht bis zum maximalen Wert $R_{max}$ aufzufüllen.

Es erscheint aus Energieeffizienzgründen nämlich sinnvoll, auf den Aufbau einer Reserve zu verzichten bzw.

eine Reserve gering zu halten, da der Aufbau der Reserve zu einem erhöhten Netzdruck p(t) führt, was wiederum zu einer erhöhten elektrischen Leistungsaufnahme der Drucklufterzeuger führt. Erkennt die Anlagensteuerung hingegen, dass in jüngster Zeit und/oder und/oder in näherer Zukunft der Verlauf des Verbrauchsvolumenstroms CVF(t) - der insbesondere für die Zukunft unter Zugrundelegung von Modellen abgeschätzt werden kann - in der Nähe des maximalen Liefervolumenstroms MDVF(t) liegt, so kann die Anlagensteuerung vorsorglich eine Reserve R(t) aufbauen, um bei einem weiteren Anstieg des Verbrauchsvolumenstroms CVF(t) Druckluft temporär aus dem wirksamen Puffervolumen bereitstellen zu können und dabei die Gefahr einer Unterschreitung des Bedarfsdruck LPL zu verringern oder sogar zu vermeiden.

Das erfindungsgemäße Verfahren zur Analyse der Druckluftversorgungssicherheit einer Druckluftanlage kann insofern beispielsweise auch in ein Steuerungsverfahren einer Druckluftanlage integriert werden, wie es in EP 09799353 beschrieben ist. Selbstverständlich kann es aber auch mit einer Vielzahl anderer alternativer Steuerungsverfahren kombiniert werden.

Alternativ oder zusätzlich ist es auch möglich, dass das Ergebnis der Analyse der Druckluftversorgungssicherheit zur Überprüfung herangezogen wird, ob die Druckluftanlage ggf. erweitert bzw. nachgerüstet werden muss. Ganz generell kann das Ergebnis der Analyse der Druckluftversorgungsicherheit auch schon vor Erstellung einer aktuellen Druckluftanlage, beispielsweise unter Berücksichtigung von Modellen der Druckluftanlage, aus denen sich auch ein Verbrauchsvolumenstrom über die Zeit CVF(t) ableiten lässt sowie unter Zugrundelegung eines maximalen Liefervolumenstroms MDVF(t) ggf. unter Berücksichtigung unterschiedlicher Szenarien bei Auslegung und/oder Planung einer Druckluftanlage herangezogen werden. Damit stellt das vorliegende Verfahren auch ein Planungsinstrument zur Auslegung bzw. Planung einer Druckluftanlage oder auch zur Erweiterung bzw. Anpassung einer bestehenden Druckluftanlage dar.

Das Verfahren zur Analyse der Druckluftversorgungsicherheit kann vollständig oder teilweise von einer Steuerungseinrichtung ausgeführt werden, die zur Steuerung der Druckluftanlage vorgesehen ist. Obwohl das erfindungsgemäße Verfahren grundsätzlich zur Planung einer Druckluftanlage, Überwachung einer Druckluftanlage oder Steuerung einer Druckluftanlage herangezogen werden kann, kann es gerade in den letztgenannten beiden Fällen, nämlich bei der Überwachung der Druckluftanlage bzw. der Steuerung der Druckluftanlage sinnvoll sein, das Verfahren vollständig oder teilweise von der Steuerungseinrichtung ausführen zu lassen.

In einer bevorzugten Ausgestaltung des erfindungsgemäßen Verfahrens können zur Abschätzung oder Berechnung eines maximalen Liefervolumenstroms MDVF(t) ein oder mehrere Simulationsmodelle $M_1, M_2,...$von Druckluftanlagen und/oder Komponenten von Druckluftanlagen Verwendung finden. Hinsichtlich der Ausgestaltung und Berücksichtigung von Simulationsmodellen $M_1, M_2,...$ von Druckluftanlagen wird ergänzend auf EP 14712233 sowie EP 14710264 verwiesen, deren Offenbarungsgehalt hinsichtlich einer möglichen Ausgestaltung von Modellen $M_1, M_2,...$von Druckluftanlagen hiermit in Bezug genommen wird.

In einer möglichen Ausgestaltung ist es denkbar, mit Methoden der künstlichen Intelligenz aus einem bestimmten Muster des Verlaufs des Verbrauchsvolumenstroms CVF(t), ggf. unter Berücksichtigung bestimmter Zusatzinformationen, wie Kalendertag, Uhrzeit, etc. Rückschlüsse auf einem anzunehmenden Verbrauchsvolumenstrom CVF(t) in der Zukunft zu treffen.In einer weiter bevorzugten Ausgestaltung können im erfindungsgemäßen Verfahren zur Analyse der Druckluftversorgungsicherheit Szenarien $S_{1(t)}, S_{2(t)}$ Berücksichtigung finden, die insbesondere

- den Ausfall von einem oder mehreren Drucklufterzeugern, und/oder
- eine prospektive Erweiterung eines zukünftigen Verbrauchs von Druckluft, beispielsweise durch Anschluss von zusätzlichen Verbrauchern an das Druckluftnetzwerk, und/oder
- das Auftreten von Druckluftverbrauchspitzen zu gewissen Zeiten bzw. über gewisse Zeiträume in einem vorgegebenen zeitlichen Verlauf

beschreiben.

Gerade die Einbeziehung vor definierter, insbesondere auch zeitabhängiger Szenarien bildet das vorgeschlagene Verfahren zur Analyse der Druckluftversorgungsicherheit in vorteilhafter Weise weiter. Die Druckluftversorgungsicherheit kann dadurch hinsichtlich verschiedener denkbarer Szenarien überprüft und in quantitativer oder qualitativer Hinsicht beurteilt werden.

Diese Szenarien können natürlich auch über den zeitlichen Verlauf des maximalen Liefervolumenstroms MDVF(t) und/oder des zeitlichen Verlaufs des Verbrauchsvolumenstroms CVF(t) definiert bzw. codiert sein. Das Szenario wäre in diesem Fall bereits in den jeweiligen Verläufen implizit beschrieben.

In einer weiteren bevorzugten Ausgestaltung des erfindungsgemäßen Verfahrens werden bei der Analyse der Druckluftversorgungssicherheit Reaktionszeiten der Drucklufterzeuger berücksichtigt. Hier geht es insbesondere um die Zuschaltzeiten der Drucklufterzeuger. Unter Zuschaltzeit ist hier die Zeitspanne zu verstehen, die von der Anforderung zur Lieferung von Druckluft am Drucklufterzeuger bis zur tatsächlichen Lieferung von Druckluft des Drucklufterzeugers vergeht. Hier dominiert insbesondere die Zeit, die für die Durchführung eines Starts eines stillstehenden Druckluftrzeugers benötigt wird.

In einer möglichen bevorzugten Ausgestaltung wird eine Wartungsterminplanungs-Routine vorgeschlagen, die auf Basis der Analyse der Druckluftversorgungssicherheit automatisch eine Wartungsterminplanung dergestalt durchgeführt, dass eine Gefährdung der Druckluftversorgungssicherheit vermieden wird. Insbesondere wird innerhalb der Wartungsterminplanungs-Routine abgeprüft, ob eine Wartung der Druckluftanlage, die ein Außerbetriebsetzen von ein oder mehreren Komponenten, insbesondere von ein oder mehreren Drucklufterzeugern umfassen kann, ohne Gefährdung der Druckluftversorgungssicherheit in einem bestimmten Zeitraum stattfinden kann.

In einer bevorzugten Weiterbildung findet in der Wartungsterminplanungs-Routine auf die für die Wartung benötigte Zeitspanne $\Delta T_w$ (mutmaßliche Dauer der Wartungsmaßnahme) Berücksichtigung, d. h. es wird überprüft, ob bei einem möglichen Wartungstermin zu einem bestimmten zukünftigen Zeitpunkt die Druckluftversorgungssicherheit auch über den gesamten Zeitraum $\Delta T_w$ gewährleistet ist.

In einer weiteren bevorzugten Ausgestaltung werden beim vorliegenden erfindungsgemäßen Verfahren als Ergebnis der Analyse der Druckluftversorgungssicherheit Maßnahmen ermittelt/ausgegeben, die die Gefährdung der Druckluftversorgungssicherheit verringern und/oder beseitigen. Derartige Maßnahmen können mittel-langfristige Maßnahmen sein, beispielsweise der Hinweis, dass die Druckluftanlage hinsichtlich der Drucklufterzeuger erweitert werden sollte und/oder kurzfristige Maßnahmen, beispielsweise Vorschläge, wie auf die Anlagensteuerung eingewirkt werden sollte bzw. eine unmittelbare automatische Einwirkung auf die Anlagensteuerung. So kann in einer bevorzugten Ausgestaltung vorgesehen sein, dass bei Gefährdung der Druckluftversorgungssicherheit, insbesondere automatisch, Maßnahmen zur Erhöhung des Liefervolumenstroms DVF(t) getroffen werden und damit der Druck im Druckluftnetzwerk angehoben bzw. zusätzliche Menge an Druckluft in das Puffervolumen eingespeist wird. Der Liefervolumenstrom DVF(t) bezeichnet dabei den tatsächlichen Liefervolumenstrom der Drucklufterzeuger zum jeweiligen Zeitpunkt t - in Abgrenzung zum maximalen Liefervolumenstrom MDVF(t).

Schließlich ist es denkbar, dass als Ergebnis der Analyse der Druckluftversorgungssicherheit ein Reservegrad und/oder eine Reserve der Druckluftanlage ermittelt und/oder angezeigt werden, insbesondere als Report ausgegeben und/oder auf ein Display angezeigt werden. Der Betreiber einer Anlage ist damit zu jedem Zeitpunkt über den Stand der Druckluftversorgungssicherheit informiert. Die Anzeige kann dabei qualitativ oder quantitativ ausgestaltet sein. Beispielsweise könnte ein Reservegrad in Prozent angegeben werden.

Es wird mit der vorliegenden Anmeldung schließlich noch ein Verfahren zur Steuerung einer Druckluftanlage vorgeschlagen, wobei das Verfahren zur Steuerung der Druckluftanlage gleichzeitig ein Verfahren zur Analyse der Druckluftversorgungsicherheit, insbesondere nach einem der Ansprüche 1 bis 19, einschließt, wobei die Druckluftanlage einen oder mehrere Drucklufterzeuger umfasst und über ein Druckluftnetzwerk ein oder mehrere Druckluftverbraucher beliefert werden. Dabei ist vorgesehen,

- dass ein zeitlicher Verlauf des maximalen Liefervolumenstroms MDVF(t) erfasst, abgeschätzt oder errechnet wird,
- dass ein zeitlicher Verlauf des Verbrauchsvolumenstroms CVF(t) erfasst, abgeschätzt oder errechnet wird,
- und dass zur Analyse der Druckluftversorgungssicherheit der zeitliche Verlauf des maximalen Liefervolumenstroms MDVF(t) und der zeitliche Verlauf des Verbrauchsvolumenstroms CVF(t) über einen Analysezeitraum automatisch miteinander verrechnet werden,

wobei die Steuerung der Druckluftanlage den Liefervolumenstrom DVF(t) erhöht, wenn die Druckluftversorgungssicherheit gefährdet ist und damit eine zusätzliche Menge an Druckluft unter Erhöhung des Netzdrucks p(t) des Druckluftnetzwerks (9) in das wirksame Puffervolumen V zur Erhöhung einer Reserve fördert.

Die Erfindung wird nachstehend auch hinsichtlich weiterer Merkmale und Vorteile anhand der Beschreibung von Ausführungsbeispielen und unter Bezugnahme auf die nachstehenden Zeichnungen erläutert.

Hierbei zeigen:

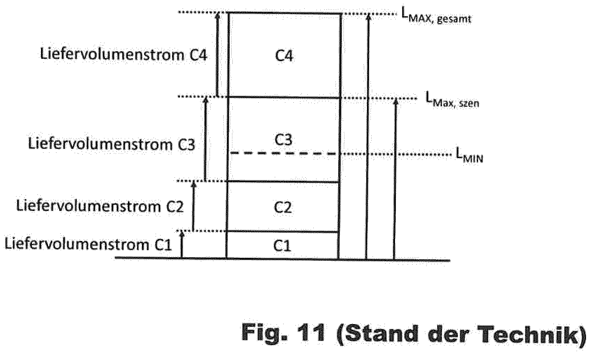

Fig. 11          eine Veranschaulichung des Vorgehens zur Auslegung einer Druckluftanlage gem. dem Stand der Technik

Fig. 1          einen schematischen, typischen Aufbau einer Druckluft-Anlage, der nachstehend der weiteren Beschreibung unterschiedlicher Laufzeitverhalten einer Druckluftanlage zugrundegelegt wird

Fig. 2          Fig. 2 zeigt das Laufzeitverhalten der Druckluftanlage nach Fig. 1.

Fig. 3 bis Fig. 6          zeigen das (berechnete) Verhalten der Druckluftanlage nach Fig.1 im Rahmen der Analyse, bei jeweils unterschiedlichen Annahmen für den Verbrauchsvolumenstrom CVF(t) und gleichzeitig an-

genommenen Ausfall des Drucklufterzeugers $C_1$

Fig. 7 bis Fig. 10      zeigen das (berechnete) Verhalten der Druckluftanlage nach Fig. 1, wobei hier beide Drucklufterzeuger den maximalen Liefervolumenstrom bereitstellen und wiederum unterschiedliche Annahmen für den Verbrauchsvolumenstrom CVF(t) getroffen sind

Fig. 12      ein Ablaufdiagramm für ein Ausführungsbeispiel des erfindungsgemäßen Verfahrens

Fig. 11 veranschaulicht das Vorgehen zur Auslegung einer Drucklaufanlage gem. dem Stand der Technik für ein Szenario, in dem der, bezogen auf den Liefervolumenstrom, größter Drucklufterzeuger ausfällt. In Fig. 11 sind drei Level für unterschiedliche Liefervolumenströme markiert, nämlich $L_{MIN}$, $L_{MAX, szen}$ sowie $L_{MAX, gesamt}$. $L_{MAX, gesamt}$ bezeichnet dabei den maximalen Liefervolumenstrom, den alle Kompressoren $C_1$ bis $C_4$ gemeinsam produzieren können. In statischer Betrachtung wird nun das Szenario unterstellt, dass der Kompressor $C_4$ mit dem größten Liefervolumenstrom ausfällt. Somit bezeichnet $S_{MAX, szen}$ den maximalen Liefervolumenstrom für das Szenario, dass Kompressor $C_4$ ausfällt und nur die Kompressoren $C_1$ bis $C_3$ Druckluft erzeugen.

$L_{MIN}$ schließlich bezeichnet den Mindestvolumenstrom, der bei Ausfall des größten Kompressors $C_4$ geliefert können werden muss.

Das Vorgehen nach dem Stand der Technik ist eine rein statische Betrachtung. Zeitliche Verläufe, insbesondere des Verbrauchsvolumenstroms, aber auch des max. Liefervolumenstroms, spielen keine Rolle.

Es wird zunächst (durch Messung oder Schätzung) der Maximalwert des Verbrauchsvolumenstroms ermittelt. Dieser wird als Mindestliefervolumenstrom interpretiert, den die Druckluftanlage auch dann noch bereitstellen können muss, wenn das ausgewählte Szenario eintritt. In Fig. 11 wird der Auslegung eines Szenario zugrundegelegt (bei dem der Drucklufterzeuger) mit dem größten Liefervolumen - bei Fig. 11 der Drucklufterzeuger C4, ausfällt. Entsprechend ist für die Überdimensionierung nicht der maximale Liefervolumenstrom aller in der Druckluftanlage enthaltener Druck-lufterzeuger ($C_1$ bis $C_4$), sondern der maximale Liefervolumenstrom bei Auswahl des Drucklufterzeugers $C_4$, also die Summe der Liefervolumenströme der Drucklufterzeuger $C_1$ bis $C_3$ relevant. Der maximale Liefervolumenstrom bei Ausfall des Drucklufterzeugers $C_4$ muss über dem Mindestvolumenstrom liegen. Nur dann ist gem. Stand der Technik, sichergestellt, dass der Verbrauchsvolumenstrom auch bei Eintritt des Szenarios gedeckt werden kann.

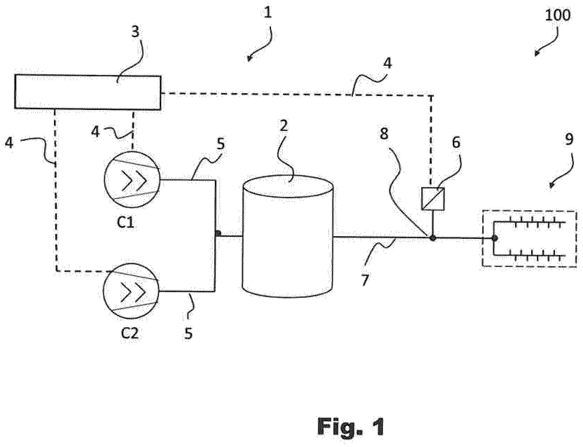

Fig. 1 zeigt einen vereinfachten Aufbau einer Druckluftanlage anhand derer nachstehend eine Ausführungsform des erfindungsgemäßen Verfahrens erläutert werden soll. In diesem Beispiel umfasst die Druckluftanlage zunächst zwei Drucklufterzeuger $C_1$, $C_2$, die Luft aus der Umgebung ansaugen, verdichten und über Leitungen 5 in einen Druckluftspeicher 2 fördern. Bereits an dieser Stelle sei angemerkt, dass Druckluftanlagen typischerweise mehr als zwei Drucklufterzeuger, oftmals 4 bis 20 Drucklufterzeuger umfassen.

Der Druckluftspeicher 2 muss nicht unbedingt ein dezidierter Speicherbehälter sein, sondern kann auch durch das funktionelle Zusammenwirken aus vielen Speichervolumina (dezidierte Speicherbehälter), Rohrleitungsvolumina,...) gebildet sein. Über ein Druckluftnetzwerk 9 wird die Druckluft an eine Vielzahl von Druckluftverbrauchern gefördert.

Die Druckluftverbraucher entnehmen dem Druckluftspeicher 2 über Leitungen 7 und über das Druckluftnetzwerk 9 Druckluft. Die Druckluftverbraucher benötigen in der Regel nicht nur einen gewissen Volumenstrom an Druckluft, sondern die Druckluft muss auf einem bestimmten Druckniveau zur Verfügung gestellt werden. Für die Einhaltung des Druckniveaus sorgt eine Anlagensteuerung 3. Dort, wo die Druckluft aus den Einrichtungen der Drucklufterzeugung und Druckluftaufbereitung an das Druckluftnetzwerk übergeben wird, ist ein Übergabepunkt 8 definiert. Am Übergabepunkt 8 kann über einen Drucksensor 6 der Ist-Wert des Netzdrucks p(t) erfasst werden. Die Anlagensteuerung 3 steuert über Steuerleitungen 4 die Drucklufterzeuger $C_1$, $C_2$ so an, dass vorgegebene Druckgrenzen zwischen einem Bedarfsdruck LPL und einer Druckspielraumgrenze UPL eingehalten werden. Die in Fig. 1 veranschaulichte Druckluftanlage wird im Folgenden als Referenz verwendet. Für die Verwendung als Referenz soll, sofern nicht anders angegeben, angenommen werden, dass

- die Kompressoren $C_1$, $C_2$ einen Liefervolumenstrom im Betriebszustand Lastlauf von jeweils 5 m$^3$/min bereitstellen,
- das wirksame Puffervolumen 2,5 m$^3$ beträgt,
- der Bedarfsdruck LPL 7 bar beträgt, und
- die Druckspielraumgrenze UPL 8 bar beträgt.

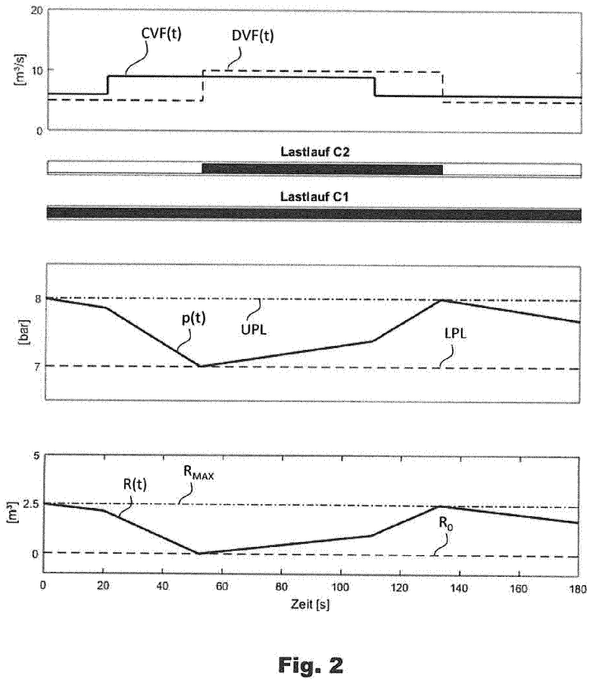

Fig. 2 zeigt beispielhaft das Laufzeitverhalten der von der Anlagensteuerung 3 gesteuerten Druckluftanlage 1. Bedingt durch den Verlauf des Verbrauchsvolumenstroms CVF(t) werden die Kompressoren $C_1$ und $C_2$ so angesteuert, dass sich der Netzdruck p(t) stets im durch Bedarfsdruck LPL und Druckspielraumgrenze UPL vorgegebenen Bereich bewegt. Dies ist hier möglich, da die Druckluftanlage für den Verlauf des Verbrauchsvolumenstroms CVF(t) ausreichend dimensioniert ist. Als Konsequenz ergibt sich eine an den Netzdruck p(t) gekoppelte schwankende Reserve R(t), die sich zwischen der Nullreserve $R_0$ und der Maximalreserve $R_{MAX}$ bewegt. Die Reserve R(t) erreicht den Wert der Null-reserve $R_0$, wenn der Netzdruck p(t) den Wert des Bedarfsdrucks LPL einnimmt. Die Reserve R(t) erreicht den Wert der Maximalreserve $R_{MAX}$, wenn der Netzdruck p(t) den Wert der Druckspielraumgrenze UPL einnimmt.

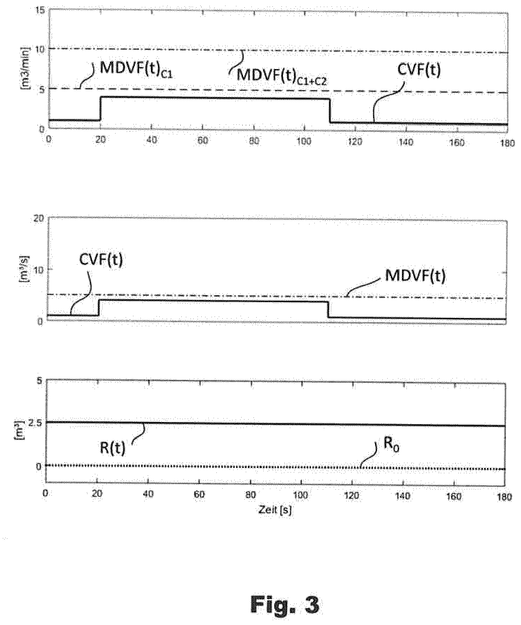

Fig. 3 zeigt beispielhaft die Anwendung des erfindungsgemäßen Verfahrens für die Druckluftanlage aus Fig. 1 unter der Annahme, dass für den betrachteten Zeitraum der Drucklufterzeuger $C_1$ nicht zur Verfügung steht. Für die Druckluftanlage gilt grundsätzlich, dass der maximale Liefervolumenstrom des Drucklufterzeugers $C_1$ einerseits und des Drucklufterzeugers C2 andererseits zur Verfügung steht mit 10 $m^3$/min im vorliegenden Beispiel. Da aber angenommen wird, dass der Drucklufterzeuger $C_1$ nicht zur Verfügung steht, entfällt der maximale Liefervolumenstrom des Drucklufterzeugers $C_1$ (hier 5 $m^3$/min) und der maximal mögliche Liefervolumenstrom MDVF wird auf 5 $m^3$/min reduziert. Für die Analyse der Druckluftversorgungssicherheit wird ein Verlauf des Verbrauchsvolumenstroms CVF(t) angenommen, der zwischen zwei Niveaus, nämlich 1 $m^3$/min und 4 $m^3$/min hin und her wechselt. Da beim vorliegenden Beispiel der Verlauf des Verbrauchsvolumenstroms CVF(t) stets unter dem maximal möglichen Liefervolumenstrom MDVF von t liegt, wird zu keinem Zeitpunkt die Reserve R für die Deckung des Verbrauchvolumenstroms CVF(t) benötigt. Der Wert der Reserve R(t) liegt daher stets auf dem Weg der Maximalreserve $R_{MAX}$ (hier 2,5 $m^3$). Zu keinem Zeitpunkt nimmt die Reserve R(t) vom Wert der Maximalreserve $R_{MAX}$ ab oder nähert sich gar der Nullreserve $R_0$ (0 $m^3$).

Eine qualitative Analyse der Druckluftversorgungssicherheit der Druckluftanlage ergibt, dass sicher keine Überlastung vorliegt, da der Wert der Reserve R(t) stets auf dem Wert der Maximalreserve $R_{MAX}$ liegt. Eine quantitative Analyse der Druckluftversorgungssicherheit ergibt, dass der Minimalwert der Reserve R(t) bei 2,5 $m^3$ liegt und damit der Reservegrad 100 % beträgt.

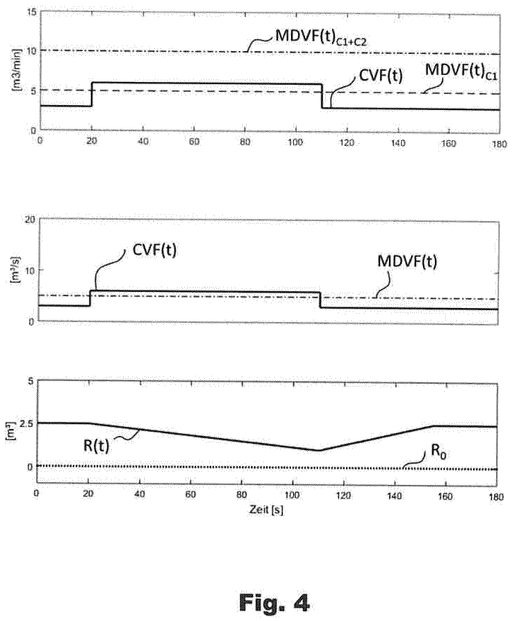

Fig. 4 zeigt die Anwendung des erfindungsgemäßen Verfahrens für die Druckluftanlage aus Fig. 1 mit den gleichen Annahmen wie in Fig. 3 mit dem Unterschied, dass der Verlauf des Verbrauchsvolumenstroms CVF(t) konstant um 2 $m^3$/min angestiegen ist und die beiden Niveaus des Verlaufs des Verbrauchsvolumenstroms CVF(t) nun bei 3 $m^3$/min und 6 $m^3$/min liegen. Der Verlauf des Verbrauchsvolumenstroms CVF(t) überschreitet nun zeitweise den maximalen Liefervolumenstrom MDVF(t). Entsprechend wird zur Deckung des Verbrauchs, wie sich aus dem Verlauf des Verbrauchsvolumenstroms CVF(t) ablesen lässt, zeitweise die Reserve R(t) benötigt. Die Reserve R(t) liegt nun nicht mehr durchgängig auf dem Wert der Maximalreserve $R_{MAX}$, sondern verringert sich zeitweise. Die Reserve R(t) erreicht bzw. unterschreitet die Nullreserve $R_0$ aber zu keinem Zeitpunkt, sondern steigt nach Reduzierung des Verbrauchsvolumenstroms CVF(t) auch wieder auf den Wert der Maximalreserve $R_{MAX}$ an.

Eine qualitative Analyse der Druckluftversorgungsicherheit ergibt, dass keine Überlastung vorliegt, da die Reserve R(t) den Wert der Nullreserve $R_0$ nicht unterschreitet. Eine quantitative Analyse der Druckluftversorgungsicherheit ergibt, dass der Minimalwert der Reserve R(t) bei 1 $m^3$ liegt und der Reservergrad 40 % (1 $m^3$/2,5 $m^3$) beträgt.

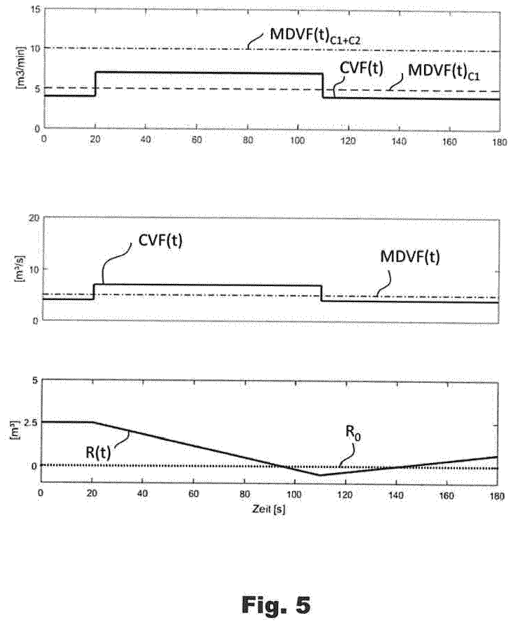

Fig. 5 zeigt die Anwendung des erfindungsgemäßen Verfahrens für die Druckluftanlage aus Fig. 1 mit den gleichen Annahmen wie in Fig. 3 und Fig. 4 mit dem Unterschied allerdings, dass der Verlauf des Verbrauchsvolumenstroms CVF(t) gegenüber der Situation in Fig. 4 konstant und 1 $m^3$/min angestiegen ist und die beiden Niveaus des Verbrauchvolumenstroms CVF(t) sich nun bei 4 $m^3$/min und 7 $m^3$/min befinden. Wie der Verlauf des Verbrauchsvolumenstroms CVF(t) zeigt, überschreitet der Verbrauchsvolumenstrom CVF(t) nun noch deutlicher zeitweise den maximalen Liefervolumenstrom MDVF (t). Entsprechend wird zur Deckung des Verbrauchsvolumenstroms CVF(t) weiterhin zeitweise die Reserve R benötigt. Die Reserve R(t) unterschreitet nun zeitweise, aber nicht dauerhaft die Nullreserve $R_0$, d. h. der festgelegte Bedarfsdruck LPL kann zeitweise nicht mehr eingehalten werden.

Eine qualitative Analyse der Druckluftversorgungssicherheit ergibt, dass eine zeitweise Überlastung vorliegt, da die Reserve die Nullreserve $R_0$ zeitweise, aber nicht dauerhaft unterschreitet. Eine quantitative Analyse der Druckluftversorgungssicherheit ergibt, dass der Minimalwert der Reserve bei -0,5 $m^3$ liegt und der Reservergrad damit -20 % beträgt.

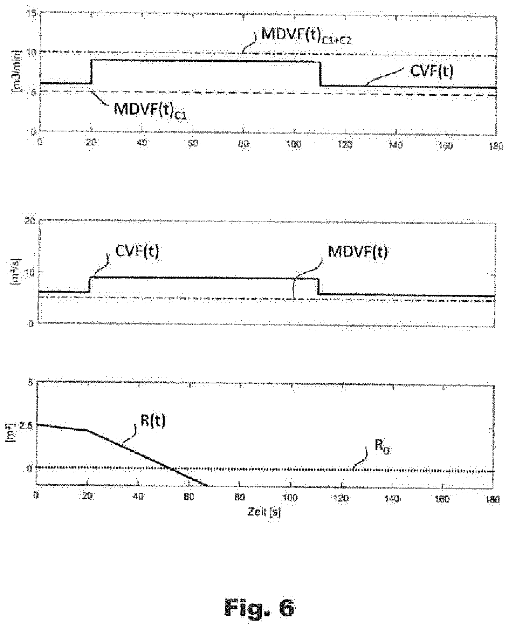

Fig. 6 zeigt die Anwendung des erfindungsgemäßen Verfahrens für die Druckluftanlage aus Fig. 1 mit den gleichen Annahmen wie in Fig. 3, Fig. 4 und Fig. 5 mit dem Unterschied allerdings, dass der Verbrauchsvolumenstrom CVF(t) gegenüber der Situation in Fig. 5 konstant um 2 $m^3$/min angestiegen ist, so dass die beiden Niveaus des Verbrauchsvolumenstroms CVF(t) sich nun bei 6 $m^3$/min und 9 $m^3$/min befinden. Der Verbrauchsvolumenstrom CVF(t) überschreitet nun immer den maximalen Liefervolumenstrom MDVF(t). Entsprechend wird zur Deckung des Verbrauchsvolumenstroms CVF(t) die Reserve R dauerhaft benötigt. Die Reserve R(t) unterschreitet nun dauerhaft die Nullreserve $R_0$. Der maximale Liefervolumenstrom MDVF (t) kann den sich im Verbrauchsvolumenstrom CVF(t) niederschlagenen Verbrauch nicht mehr decken.

Eine qualitative Analyse der Druckluftversorgungssicherheit ergibt, dass eine dauerhafte Überlastung vorliegt, da die Reserve R(t) den Wert der Nullreserve $R_0$ dauerhaft unterschreitet. Eine quantitative Analyse der Druckluftversorgungssicherheit ergibt, dass der Minimalwert der Reserve R(t) bei $-\infty$ $m^3$ liegt und der Reservegrad damit $-\infty$ beträgt.

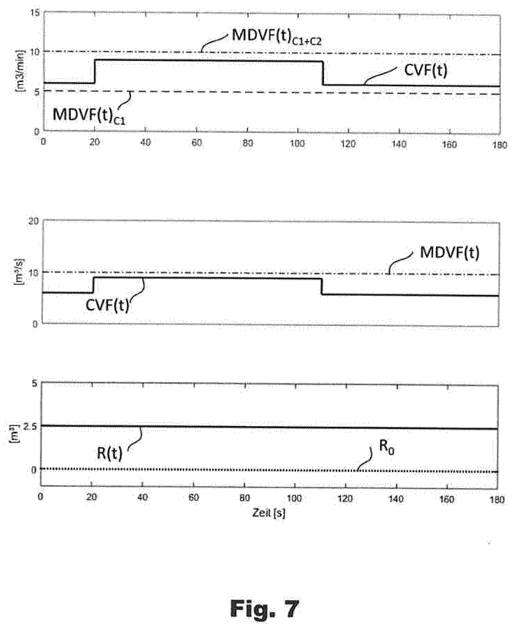

In Fig. 7 ist beispielhaft die Anwendung des erfindungsgemäßen Verfahrens für die Druckluftanlage aus Fig. 1 unter der Annahme veranschaulicht, dass im Gegensatz zu den Szenarien in Fig. 3 bis 6 neben Drucklufterzeuger $C_2$ auch Drucklufterzeuger $C_1$ zur Verfügung steht. Der maximale Liefervolumenstrom von $C_1$ und $C_2$ beträgt somit 10 $m^3$/min. Für die Analyse der Druckluftversorgungsicherheit wird ein Verlauf des Verbrauchsvolumenstroms CVF(t) angenommen, der (wie bereits anhand von Fig. 6 angenommen) zwischen zwei Niveaus zwischen 6 m³/min und 9 m³/min hin und her wechselt. Da der Verlauf des Verbrauchsvolumenstroms CVF(t) stets unter dem maximalen Liefervolumenstrom MDVF(t) liegt, wird zu keinem Zeitpunkt die Reserve R(t) für die Deckung des Verlaufs des Verbrauchsvolumenstroms CVF(t) benötigt. Der Wert der Reserve bleibt daher stets auf dem Wert der Maximalreserve $R_{MAX}$ (hier 2,5 m³). Zu keinem Zeitpunkt reduziert sich die Reserve R(t) von diesem Wert der Maximalreserve $R_{MAX}$.

Eine qualitative Analyse der Druckluftversorgungssicherheit ergibt, dass sicher keine Überlastung vorliegt, da die Reserve R(t) stets auf dem Wert der Maximalreserve $R_{MAX}$ liegt. Eine quantitative Analyse der Druckluftversorgungssicherheit ergibt, dass der Minimalwert der Reserve R(t) bei 2,5 m³ liegt und damit der Reservegrad 100 % beträgt.

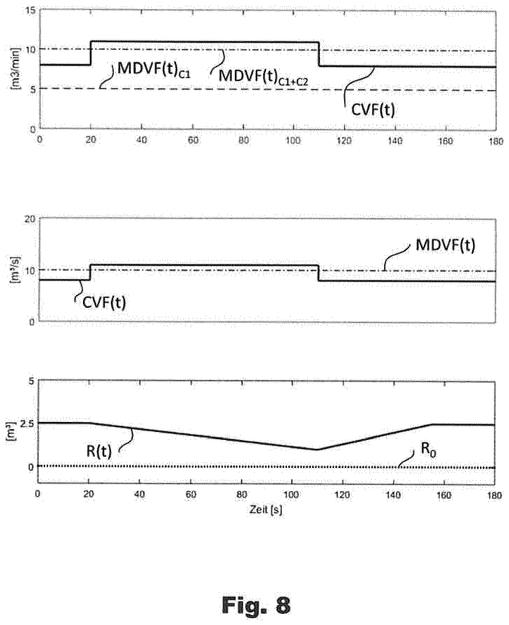

In Fig. 8 ist die Anwendung des erfindungsgemäßen Verfahrens für die Druckluftanlage aus Fig. 1 mit den gleichen Annahmen wie in Fig. 7 dargestellt, mit dem Unterschied allerdings, dass der Verlauf des Verbrauchsvolumenstroms CVF(t) konstant um 2 m³/min angestiegen ist und die beiden Niveaus des Verbrauchsvolumenstroms CVF(t) sich nun bei 8 m³/min und 11 m³/min befinden. Der Verbrauchsvolumenstrom CVF(t) überschreitet nun zeitweise den maximalen Liefervolumenstrom MDVF(t). Entsprechend wird zur Deckung des Verbrauchsvolumenstroms CVF(t) zeitweise die Reserve R(t) benötigt. Die Reserve R(t) liegt nun nicht mehr durchgängig auf dem Wert der Maximalreserve $R_{MAX}$, sondern verringert sich vom Wert der Maximalreserve $R_{MAX}$ ausgehend zeitweise. Die Reserve R(t) erreicht bzw. unterschreitet die Nullreserve $R_0$ aber nicht. Eine qualitative Analyse der Druckluftversorgungssicherheit ergibt, dass keine Überlastung vorliegt, da die Reserve den Wert der Nullreserve $R_0$ nicht unterschreitet. Eine quantitative Analyse der Druckluftversorgungssicherheit ergibt, dass der Minimalwert der Reserve R(t) bei 1 m³ liegt und der Reservegrad 40 % (1 m³/2,5 m³) beträgt.

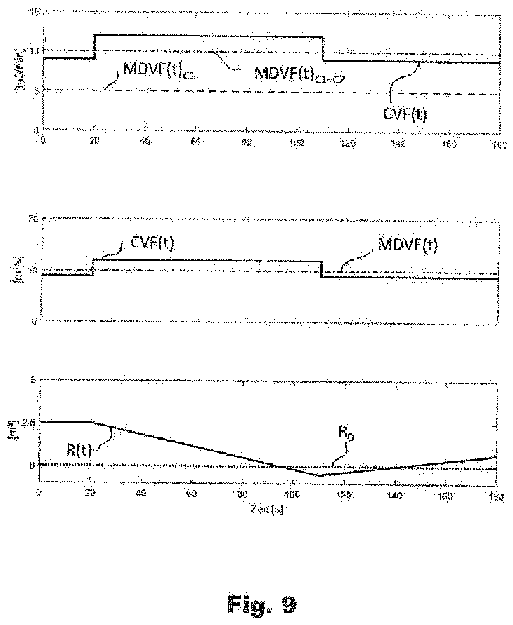

In Fig. 9 ist die Anwendung des erfindungsgemäßen Verfahrens für die Druckluftanlage aus Fig. 1 mit den gleichen Annahmen wie in Fig. 7 und Fig. 8 mit dem Unterschied dargestellt, dass der Verbrauchsvolumenstrom CVF(t) gegenüber der Situation in Fig. 8 konstant um ein 1 m³/min angestiegen ist und die beiden Niveaus des Verbrauchsvolumenstroms CVF(t) sich nun bei 9 m³/min und 12 m³/min befinden. Der Verbrauchsvolumenstrom CVF(t) überschreitet nun doch deutlicher zeitweise den maximalen Liefervolumenstrom MDVF(t). Entsprechend wird zur Deckung des Verbrauchsvolumenstroms CVF(t) weiterhin zeitweise die Reserve R(t) benötigt. Die Reserve R(t) unterschreitet nun zeitweise, aber nicht dauerhaft, die Nullreserve $R_0$, d. h. der festgelegte Bedarfsdruck LPL kann in diesem Zeitraum nicht eingehalten werden.

Eine qualitative Analyse der Druckluftversorgungssicherheit ergibt, dass eine zeitweise Überlastung vorliegt, da die Reserve R(t) den Wert der Nullreserve $R_0$ zeitweise, aber nicht dauerhaft unterschreitet. Eine quantitative Analyse der Druckluftversorgungssicherheit ergibt, dass der Minimalwert der Reserve R(t) bei - 0,5 m³ liegt und der Reservegrad damit -20 % beträgt.

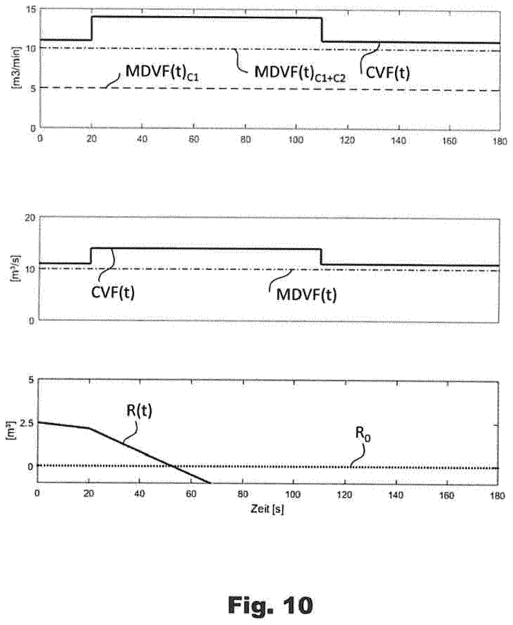

Fig. 10 zeigt die Anwendung des erfindungsgemäßen Verfahrens für die Druckluftanlage aus Fig. 1 mit den gleichen Annahmen wie in Fig. 7, Fig. 8 und Fig. 9, mit dem Unterschied, dass der Verbrauchsvolumenstrom CVF(t) gegenüber der Situation in Fig. 9 konstant um 2 m³/min angestiegen ist und die beiden Niveaus des Verbrauchsvolumenstroms CVF(t) sich nun bei 11 m³/min und 14 m³/min befinden. Der Verbrauchsvolumenstrom CVF(t) überschreitet nun immer den maximal möglichen Liefervolumenstrom MDVF(t). Entsprechend wird zur Deckung des Verbrauchsvolumenstroms CVF(t) dauerhaft die Reserve von R(t) benötigt. Die Reserve R(t) unterschreitet nun dauerhaft die Nullreserve $R_0$.

Eine qualitative Analyse der Druckluftversorgungsicherheit ergibt, dass eine dauerhafte Überlastung vorliegt, da die Reserve R(t) den Wert der Nullreserve $R_0$ dauerhaft unterschreitet. Eine quantitative Analyse der Druckluftversorgungssicherheit ergibt, dass der Minimalwert der Reserve R(t) bei -∞ m³ liegt und der Reservegrad damit -∞ beträgt.

Die Ausführungsbeispiele nach den Fig. 3 bis Fig. 11 zeigen jeweils einen konstanten Verlauf des maximalen Liefervolumenstroms MDVF(t). Dies ist nur beispielhaft zu verstehen. Wie der Verbrauchsvolumenstrom CVF(t), kann der maximale Liefervolumenstrom MDFV(t) zeitlich schwanken, z.B. wenn im Analysezeitraum für die Dauer $\Delta T_w$ ein Drucklufterzeuger geplant ausfällt.

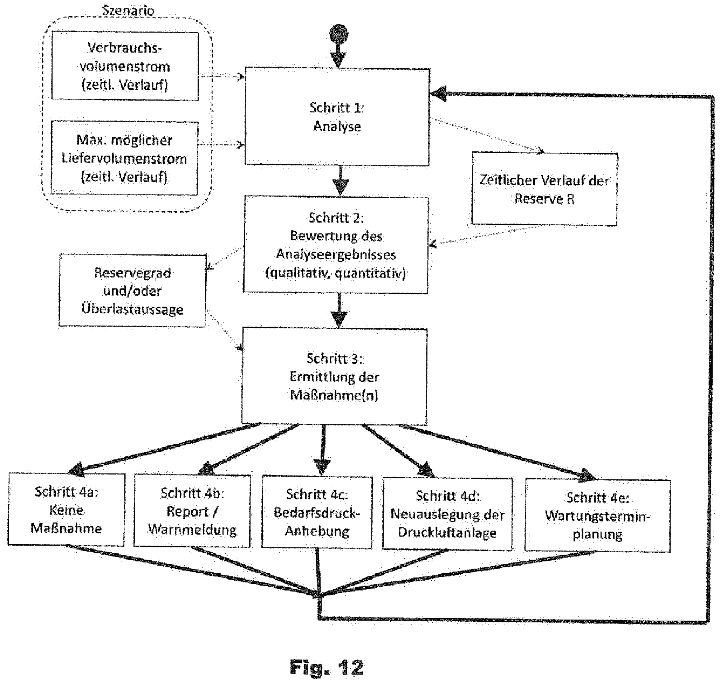

In Fig. 12 ist das erfindungsgemäße Verfahren in einem Ablaufdiagramm veranschaulicht. Das Verfahren kann zyklisch, ereignisgetrieben und/oder einmalig initiiert werden. Ein Anlass das Verfahren zur Analyse der Druckluftversorgungssicherheit nach dem vorliegenden Ausführungsbeispiel zu starten, könnte beispielsweise darin liegen, zu prüfen, ob eine Wartung in einem bestimmten Zeitraum möglich ist bzw. welche Zeiträume sich für eine Wartung anbieten könnten. Darüber hinaus könnte zyklisch oder auch periodisch geprüft werden, ob eine Neuauslegung der Druckluftanlage zur Erzielung eines bestimmten Maßes an Druckluftversorgungssicherheit notwendig erscheint. Weiterhin könnte zyklisch, beispielsweise durch die Anlagensteuerung - überwacht werden, ob eine ausreichende Druckluftversorgungssicherheit vorliegt und ein entsprechender Bericht einer qualitativen oder quantitativen Auswertung, beispielsweise auf einem Display, ausgegeben werden. Schließlich könnte im Rahmen der Anlagensteuerung im Betrieb das Verfahren dauerhaft mitlaufen, um zu eruieren, inwieweit Steuerungsmaßnahmen notwendig oder wenigstens sinnvoll sind, um die Druckluftversorgungssicherheit zu verbessern, beispielsweise eine Anhebung des Bedarfsdrucks vorzunehmen bzw. die Reserve weiter aufzufüllen.

Zunächst wird dem Verfahren zur Analyse der Druckluftversorgungssicherheit ein bestimmtes Szenario zugrundegelegt. Ein mögliches Szenario könnte beispielsweise darin bestehen, dass ein Drucklufterzeuger mit einem bestimmten Liefervolumenstrom ausfällt. In diesem Szenario ergeben sich bestimmte zeitliche Verläufe für den Verbrauchsvolumenstrom bzw. bestimmte zeitliche Verläufe für einen maximalen Liefervolumenstrom. In einem Schritt 1 wird eine Analyse durch zeitliches Verrechnen des maximalen Liefervolumenstroms MDVF(t) und des zeitlichen Verlaufs des Verbrauchsvolumenstroms CVF(t) durchgeführt, wobei bei dieser Analyse vorzugsweise auch das wirksame Puffervolumen V berücksichtigt wird. In einem Schritt 2 erfolgt eine Bewertung des Analyseergebnisses und zwar wahlweise qualitativ und/oder quantitativ. Die Bewertung erfolgt dadurch, dass qualitativ und/oder quantitativ eine Aussage über den Reservegrad bzw. eine Überlastungsaussage getroffen wird.

In einem Schritt 3 wird über einzuleitende Maßnahmen entschieden die in einem Schritt 4 ausgeführt werden. Maßnahmen, die in Schritt 4 ausgeführt werden können umfassen

- keine Maßnahme
- Report/Warnmeldung und/oder
- Bedarfsdruckanhebung,
- Neuauslegung der Druckluftanlage
- Wartungsterminplanung

Bezugszeichenliste:

| AP | Umgebungsdruck |
|---|---|
| $\Delta T_W$ | Dauer der Wartungsmaßnahme |
| C1, C2 | Kompressoren |
| CVF(t) | Verbrauchsvolumenstrom |
| DVFE(t) | Liefervolumenstromüberschuss |
| LPL | vorgebbarer Bedarfsdrucks |
| MDVF(t) | maximaler Lieferstrom |
| $R_{MAX}$ | maximale Reserve |
| UPL | Druckspielraumgrenze |
| V | Puffervolumen |
| 2 | Druckluftspeicher |
| 3 | Anlagensteuerung |
| 4 | Steuerleitungen |
| 5, 7 | Leitungen |
| 6 | Drucksensor |
| 8 | Übergabepunkt |
| 9 | Druckluftnetzwerk |

**Patentansprüche**

1. Verfahren zur Analyse der Druckluftversorgungssicherheit einer Druckluftanlage, die einen oder mehrere Drucklufterzeuger ($C_1$, $C_2$) umfasst und über ein Druckluftnetzwerk (9) ein oder mehrere Druckluftverbraucher beliefert, **dadurch gekennzeichnet,**

   - **dass** ein zeitlicher Verlauf des maximalen Liefervolumenstroms MDVF(t) erfasst, abgeschätzt oder errechnet wird,
   - **dass** ein zeitlicher Verlauf des Verbrauchsvolumenstroms CVF(t) erfasst, abgeschätzt oder errechnet wird,
   - und **dass** zur Analyse der Druckluftversorgungssicherheit der zeitliche Verlauf des maximalen Liefervolumenstroms MDVF(t) und der zeitliche Verlauf des Verbrauchsvolumenstroms CVF(t) über einen Analysezeitraum automatisch miteinander verrechnet werden.

2. Verfahren nach Anspruch 1, **dadurch gekennzeichnet, dass** der Analysezeitraum auch oder ausschließlich einen Zeitraum in der Vergangenheit umfasst, so dass eine zeitliche Verrechnung des maximalen Liefervolumenstroms MDVF(t) und des zeitlichen Verlaufs des Verbrauchsvolumenstroms CVF(t) teilweise oder vollständig unter Berücksichtigung der Vergangenheit erfolgt.

**3.** Verfahren nach Anspruch 1,
**dadurch gekennzeichnet, dass**
der Analysezeitraum auch oder ausschließlich einen Zeitraum in der Zukunft umfasst, so dass eine zeitliche Verrechnung des maximalen Liefervolumenstroms MDVF(t) und des zeitlichen Verlaufs des Verbrauchsvolumenstroms CVF(t) teilweise oder vollständig unter Berücksichtigung der Zukunft erfolgt.

**4.** Verfahren nach einem der Ansprüche 1 bis 3,
**dadurch gekennzeichnet, dass**
zur Analyse der Druckluftversorgungssicherheit im Analysezeitraum an einer Vielzahl von, insbesondere aufeinanderfolgenden Zeitpunkten $t_0$, ..., $t_i$, ... eine Differenzbildung von maximalem Liefervolumenstrom MDVF(t) und Verbrauchsvolumenstrom CVF(t) vorgenommen und in der Analyse berücksichtigt wird.

**5.** Verfahren nach einem der Ansprüche 1 bis 4,
**dadurch gekennzeichnet, dass**
zur Analyse der Druckluftversorgungssicherheit ein Liefervolumenstromüberschuss DVFE(t) über eine oder mehrere bestimmte Zeitspannen integriert wird, wobei DVFE(t) = MDVF(t) - CVF(t).

**6.** Verfahren nach einem der Ansprüche 1 bis 5,
**dadurch gekennzeichnet, dass**
bei der Analyse der Druckluftversorgungssicherheit das wirksame Puffervolumen V bzw. die im wirksamen Puffervolumen V abspeicherbare maximale Reserve $R_{MAX}$ berücksichtigt wird.

**7.** Verfahren nach Anspruch 6,
**dadurch gekennzeichnet, dass**
sich die maximale Reserve $R_{MAX}$ im Falle einer vorgebbaren Druckspielraumgrenze UPL und eines vorgebbaren Bedarfsdrucks LPL wie folgt ergibt:

$$R_{MAX} = \frac{UPL - LPL}{AP} * V,$$

wobei V das wirksame Puffervolumen und AP der Umgebungsdruck ist.

**8.** Verfahren nach einem der Ansprüche 1 bis 5,
**dadurch gekennzeichnet, dass**
bei der Analyse der Druckluftversorgungssicherheit die im wirksamen Puffervolumen V gespeicherte Reserve R(t) berücksichtigt wird.

**9.** Verfahren nach einem der Ansprüche 1 bis 7,
**dadurch gekennzeichnet, dass**
das Ergebnis der Analyse der Druckluftversorgungssicherheit zur Wartungsterminplanung herangezogen wird.

**10.** Verfahren nach einem der Ansprüche 1 bis 8,
**dadurch gekennzeichnet, dass**
das Ergebnis der Analyse der Druckluftversorgungssicherheit automatisch in ein Steuerungsverfahren der Druckluftanlage eingeht, das den Betrieb der Druckluftanlage steuert.

**11.** Verfahren nach einem der Ansprüche 1 bis 9,
**dadurch gekennzeichnet, dass**
das Ergebnis der Analyse der Druckluftversorgungssicherheit zu Planungszwecken herangezogen wird zur:

- Auslegung einer Druckluftanlage oder
- Erweiterung bzw. Anpassung einer bestehenden Druckluftanlage.

**12.** Verfahren nach einem der Ansprüche 1 bis 10,
**dadurch gekennzeichnet, dass**
das Verfahren zur Analyse der Druckluftversorgungssicherheit vollständig oder teilweise von einer Steuerungseinrichtung ausgeführt wird, die zur Steuerung der Druckluftanlage vorgesehen ist.

**13.** Verfahren nach einem der Ansprüche 1 bis 11,
**dadurch gekennzeichnet, dass**
im Verfahren zur Analyse der Druckluftversorgungssicherheit insbesondere zur Abschätzung oder Berechnung eines maximalen Liefervolumenstroms MDVF(t) ein oder mehrere Simulationsmodelle $M_1$, $M_2$, ... von Druckluftanlagen und/oder von Komponenten von Druckluftanlagen Verwendung finden.

**14.** Verfahren nach einem der Ansprüche 1 bis 12,
**dadurch gekennzeichnet, dass**
im Verfahren zur Analyse der Druckluftversorgungssicherheit Szenarien $S_{1(t)}$, $S_{2(t)}$, ... Berücksichtigung finden, die insbesondere

- den Ausfall von eines oder mehrerer Drucklufterzeuger, und/oder
- eine prospektive Erweiterung eines zukünftigen Verbrauchs von Druckluft, beispielsweise durch Anschluss von zusätzlichen Verbrauchern an das Druckluftnetzwerk (9), und/oder
- das Auftreten von Druckluftverbrauchsspitzen zu gewissen Zeiten bzw. über gewisse Zeiträume

in einem vorgegebenen zeitlichen Verlauf beschreiben.

**15.** Verfahren nach einem der Ansprüche 1 bis 13,
**dadurch gekennzeichnet, dass**
bei der Analyse der Druckluftversorgungssicherheit Reaktionszeiten der Drucklufterzeuger ($C_1$, $C_2$, ...), insbesondere Zuschaltzeiten berücksichtigt werden.

**16.** Verfahren nach einem der Ansprüche 1 bis 14,
**dadurch gekennzeichnet, dass**
in einer Wartungsterminplanungs-Routine auf Basis der Analyse der Druckluftversorgungssicherheit automatisch eine Wartungsterminplanung ermittelt wird, bei der eine Gefährdung der Druckluftversorgungssicherheit vermieden wird und wobei in der Wartungsterminplanungs-Routine insbesondere abgeprüft wird, ob eine Wartung der Druckluftanlage ohne Gefährdung der Druckluftversorgungssicherheit in einem bestimmten Zeitraum stattfinden kann.

**17.** Verfahren nach Anspruch 15,
**dadurch gekennzeichnet, dass**
in der Wartungsterminplanungs-Routine auch die für die Wartung benötigte Zeitspanne $\Delta T_w$ (Dauer der Wartungsmaßnahme) Berücksichtigung findet.

**18.** Verfahren nach einem der Ansprüche 1 bis 16,
**dadurch gekennzeichnet, dass**
als Ergebnis der Analyse der Druckluftversorgungssicherheit Maßnahmen ermittelt/ausgegeben werden, die die Gefährdung der Druckluftversorgungssicherheit verringern und/oder beseitigen.

**19.** Verfahren nach einem der Ansprüche 1 bis 17, insbesondere nach Anspruch 9,
**dadurch gekennzeichnet, dass**
bei Gefährdung der Druckluftversorgungssicherheit, insbesondere automatisch, Maßnahmen zur Erhöhung des Liefervolumenstroms DVF(t) getroffen werden und damit der Druck im Druckluftnetzwerk angehoben bzw. zusätzliche Menge an Druckluft in das Puffervolumen eingespeist wird.

**20.** Verfahren nach einem der Ansprüche 1 bis 18,
**dadurch gekennzeichnet, dass**
das Ergebnis der Analyse der Druckluftversorgungssicherheit ein Reservegrad und/oder eine Reserve der Druckluftanlage ermittelt und/oder angezeigt werden, insbesondere als Report ausgegeben und/oder auf einem Display angezeigt werden.

**21.** Verfahren zur Steuerung einer Druckluftanlage, wobei das Verfahren zur Steuerung der Druckluftanlage gleichzeitig ein Verfahren zur Analyse der Druckluftversorgungssicherheit, insbesondere nach einem der Ansprüche 1 bis 19, einschließt, wobei die Druckluftanlage einen oder mehrere Drucklufterzeuger ($C_1$, $C_2$, ...) umfasst und über ein Druckluftnetzwerk (9) ein oder mehrere Druckluftverbraucherbeliefert,
**dadurch gekennzeichnet,**

- **dass** ein zeitlicher Verlauf des maximalen Liefervolumenstroms MDVF(t) erfasst, abgeschätzt oder errechnet wird,
- **dass** ein zeitlicher Verlauf des Verbrauchsvolumenstroms CVF(t) erfasst, abgeschätzt oder errechnet wird,
- und **dass** zur Analyse der Druckluftversorgungssicherheit der zeitliche Verlauf des maximalen Liefervolumenstroms MDVF(t) und der zeitliche Verlauf des Verbrauchsvolumenstroms CVF(t) über einen Analysezeitraum miteinander verrechnet werden,

wobei die Steuerung der Druckluftanlage den Liefervolumenstrom DVF(t) erhöht, wenn die Druckluftversorgungssicherheit gefährdet ist und damit eine zusätzliche Menge an Druckluft unter Erhöhung des Netzdrucks p(t) in das wirksame Puffervolumen zur Erhöhung einer Reserve fördert.

## Claims

1. A method for analyzing the compressed air supply security of a compressed air system which comprises one or more compressed air generators ($C_1$, $C_2$) and supplies one or more compressed air loads via a compressed air network (9),
   **characterized in**

   - **that** a time curve of the maximum delivery volumetric flow rate MDVF(t) is sensed, estimated or calculated,
   - **that** a time curve of the consumption volumetric flow rate CVF(t) is sensed, estimated or calculated,
   - and **that**, for the analysis of the compressed air supply security, the time curve of the maximum delivery volumetric flow rate MDVF(t) and the time curve of the consumption volumetric flow rate CVF(t) are automatically offset against each other over an analysis time period.

2. The method according to claim 1,
   **characterized in that**
   the analysis time period comprises also or exclusively a time period in the past so that a temporal offsetting of the maximum delivery volumetric flow rate MDVF(t) and the time curve of the consumption volumetric flow rate CVF(t) is performed in part or completely in consideration of the past.

3. The method according to claim 1,
   **characterized in that**
   the analysis time period comprises also or exclusively a time period in the future, so that a temporal offsetting of the maximum delivery volumetric flow rate MDVF(t) and the time curve of the consumption volumetric flow rate CVF(t) is performed in part or completely in consideration of the future.

4. The method according to anyone of claims 1 to 3,
   **characterized in that**,
   for analyzing the compressed air supply security in the analysis time period, a plurality of in particular consecutive times $t_0$, ..., $t_i$, ..., a subtraction of the maximum delivery volumetric flow rate MDVF(t) and consumption volumetric flow rate CVF(t) is performed and taken into account in the analysis.

5. The method according to anyone of claims 1 to 4,
   **characterized in that**,
   for analyzing the compressed air supply security, a delivery volumetric flow rate excess (DVFE(t)) is integrated over one or more determined time spans, wherein DVFE(t) = MDVF(t) - CVF(t).

6. The method according to anyone of claims 1 to 5,
   **characterized in that**,
   in the analysis of the compressed air supply security, the effective buffer volume V or the maximum reserve $R_{MAX}$ which is storable in the buffer volume V is taken into account.

7. The method according to claim 6,
   **characterized in that**
   the maximum reserve $R_{MAX}$ in the case of a definable pressure tolerance limit UPL and a definable required pressure LPL is calculated as follows:

$$R_{MAX} = \frac{UPL - LPL}{AP} * V$$
,

wherein V is the effective buffer volume and AP is the ambient pressure.

8. The method according to anyone of claims 1 to 5,
   **characterized in that**,
   in the analysis of the compressed air supply security, the reserve R(t) stored in the effective buffer volume V is taken into account.

9. The method according to anyone of claims 1 to 7,
   **characterized in that**
   the result of the analysis of the compressed air supply security is used for maintenance scheduling.

10. The method according to anyone of claims 1 to 8,
    **characterized in that**
    the result of the analysis of the compressed air supply security is entered automatically into a control method of the compressed air system which controls the operation of the compressed air system.

11. The method according to anyone of claims 1 to 9,
    **characterized in that**
    the result of the analysis of the compressed air supply security is used for planning purposes for:

    - designing a compressed air system, or
    - extending or adapting an existing compressed air system.

12. The method according to anyone of claims 1 to 10,
    **characterized in that**
    the method for analyzing the compressed air supply security is completely or partially implemented by a control device which is provided for controlling the compressed air system.

13. The method according to anyone of claims 1 to 11,
    **characterized in that**,
    in the method for analyzing the compressed air supply security, in particular for estimating or calculating a maximum delivery volumetric flow rate MDVF(t), one or more simulation models $M_1$, $M_2$, ... of compressed air systems and/or components of compressed air systems are used.

14. The method according to anyone of claims 1 to 12,
    **characterized in that**,
    in the method for analyzing of the compressed air supply security, scenarios $S_{1(t)}$, $S_{2(t)}$, ... are taken into account which in particular describe in a predefined time curve

    - the failure of one or more compressed air generators, and/or
    - a prospective extension of a future consumption of compressed air, for example, due to connecting additional loads to the compressed air network (9), and/or
    - the occurrence of compressed air consumption peaks at certain times or over certain periods.

15. The method according to anyone of claims 1 to 13,
    **characterized in that**
    in the analysis of the compressed air supply security, response times of the compressed air generators ($C_1$, $C_2$), in particular switch-on times are taken into account.

16. The method according to anyone of claims 1 to 14,
    **characterized in that**,
    in a maintenance scheduling routine, maintenance scheduling is automatically determined on the basis of the analysis of the compressed air supply security, in which a risk for the compressed air supply security is avoided, and wherein it is in particular checked in the maintenance scheduling routine whether maintenance of the compressed air system can take place in a determined period without compromising the compressed air supply security.

17. The method according to claim 15,
**characterized in that**,
in the maintenance scheduling routine, the time span $\Delta T_w$ (duration of the maintenance measure) required for maintenance is also taken into account.

18. The method according to anyone of claims 1 to 16,
**characterized in that**,
as a result of the analysis of the compressed air supply security, measures are determined/output which reduce and/or eliminate the risk for the compressed air supply security.

19. The method according to anyone of claims 1 to 17, in particular according to claim 9,
**characterized in that**,
in the event of a risk for the compressed air supply security, measures are taken, in particular automatically, for increasing the delivery volumetric flow rate DVF(t), and thus the pressure in the compressed air network is raised or an additional amount of compressed air is fed into the buffer volume.

20. The method according to anyone of claims 1 to 18,
**characterized in that**,
as a result of the analysis of the compressed air supply security, a reserve level and/or a reserve of the compressed air system are determined and/or displayed, in particular are output as a report and/or are displayed on a display.

21. A method for controlling a compressed air system, wherein the method for controlling a compressed air system includes at the same time a method for analyzing the compressed air supply security, in particular according to anyone of claims 1 to 19, wherein the compressed air system comprises one or more compressed air generators ($C_1$, $C_2$) and supplies one or more compressed air loads via a compressed air network (9),
**characterized in**

- **that** a time curve of the maximum delivery volumetric flow rate MDVF(t) is sensed, estimated or calculated,
- **that** a time curve of the consumption volumetric flow rate CVF(t) is sensed, estimated or calculated,
- and **that**, for the analysis of the compressed air supply security, the time curve of the maximum delivery volumetric flow rate MDVF(t) and the time curve of the consumption volumetric flow rate CVF(t) are automatically offset against each other over an analysis time period,

wherein the control of the compressed air system increases the delivery volumetric flow rate DVF(t) when the compressed air supply security is compromised and thus conveys an additional amount of compressed air into the effective buffer volume for increasing a reserve while raising the network pressure p(t).

**Revendications**

1. Procédé d'analyse de la sécurité d'approvisionnement en air comprimé d'une installation d'air comprimé qui comprend un ou plusieurs générateurs d'air comprimé ($C_1$, $C_2$) et alimente un ou plusieurs consommateurs d'air comprimé via un réseau d'air comprimé (9),
**caractérisé en ce que**

- une allure temporelle du débit volumétrique de fourniture maximal MDVF(t) est saisie, estimée ou calculée,
- une allure temporelle du débit volumétrique de consommation CVF(t) est saisie, estimée ou calculée,
- et, pour l'analyse de la sécurité d'approvisionnement en air comprimé, l'allure temporelle du débit volumétrique de fourniture maximal MDVF(t) et l'allure temporelle du débit volumétrique de consommation CVF(t) sont automatiquement compensées l'une par rapport à l'autre sur une période d'analyse.

2. Procédé selon la revendication 1,
**caractérisé en ce que**
la période d'analyse comprend aussi ou exclusivement une période dans le passé, de sorte qu'une compensation temporelle du débit volumétrique de fourniture maximal MDVF(t) et de l'allure temporelle du débit volumétrique de consommation CVF(t) soit effectuée en prenant en compte le passé en tout en ou en partie.

3. Procédé selon la revendication 1,
   **caractérisé en ce que**
   la période d'analyse comprend aussi ou exclusivement une période dans le futur, de sorte qu'une compensation temporelle du débit volumétrique de fourniture maximal MDVF(t) et de l'allure temporelle du débit volumétrique de consommation CVF(t) soit effectuée en prenant en compte le futur en tout en ou en partie.

4. Procédé selon l'une des revendications 1 à 3,
   **caractérisé en ce que**
   pour l'analyse de la sécurité d'approvisionnement en air comprimé, dans la période d'analyse, à une pluralité de moments $t_0$, ..., $t_1$, ... en particulier consécutifs, une soustraction du débit volumétrique de fourniture maximal MDVF(t) et du débit volumétrique de consommation CVF(t) est effectuée et prise en compte dans l'analyse.

5. Procédé selon l'une des revendications 1 à 4,
   **caractérisé en ce que**
   pour l'analyse de la sécurité d'approvisionnement en air comprimé, un excédent de débit volumétrique de fourniture DVFE(t) est intégré sur un ou plusieurs intervalles de temps déterminés, sachant que DVFE(t) = MDVF(t) - CVF(t).

6. Procédé selon l'une des revendications 1 à 5,
   **caractérisé en ce que**
   lors de l'analyse de la sécurité d'approvisionnement en air comprimé, le volume tampon effectif V, ou la réserve maximale $R_{MAX}$ stockable dans le volume tampon effectif V, est pris en compte.

7. Procédé selon la revendication 6,
   **caractérisé en ce que**
   la réserve maximale $R_{MAX}$, dans le cas d'une limite de plage de pression spécifiable UPL et d'une pression requise spécifiable LPL, est déterminée comme suit :

$$R_{MAX} = \frac{UPL - LPL}{AP} * V,$$

sachant que V est le volume tampon effectif et AP est la pression ambiante.

8. Procédé selon l'une des revendications 1 à 5,
   **caractérisé en ce que**
   lors de l'analyse de la sécurité d'approvisionnement en air comprimé, la réserve R(t) stockée dans le volume tampon effectif V est prise en compte.

9. Procédé selon l'une des revendications 1 à 7,
   **caractérisé en ce que**
   le résultat de l'analyse de la sécurité d'approvisionnement en air comprimé est utilisé pour la planification des échéances d'entretien.

10. Procédé selon l'une des revendications 1 à 8,
    **caractérisé en ce que**
    le résultat de l'analyse de la sécurité d'approvisionnement en air comprimé est automatiquement intégré dans un procédé de commande qui commande le fonctionnement de l'installation d'air comprimé.

11. Procédé selon l'une des revendications 1 à 9,
    **caractérisé en ce que**
    le résultat de l'analyse de la sécurité d'approvisionnement en air comprimé est utilisé à des fins de planification pour :

    - la conception d'une installation d'air comprimé ou
    - l'extension ou l'adaptation d'une installation d'air comprimé existante.

**12.** Procédé selon l'une des revendications 1 à 10,
**caractérisé en ce que**
le procédé d'analyse de la sécurité d'approvisionnement en air comprimé est exécuté en tout ou en partie par un dispositif de commande qui est prévu pour la commande de l'installation d'air comprimé.

**13.** Procédé selon l'une des revendications 1 à 11,
**caractérisé en ce que**
dans le procédé d'analyse de la sécurité d'approvisionnement en air comprimé, en particulier pour l'estimation ou le calcul d'un débit volumétrique de fourniture maximal MDVF(t), un ou plusieurs modèles de simulation $M_1$, $M_2$, ... d'installations d'air comprimé et/ou de composants d'installations d'air comprimé sont appliqués.

**14.** Procédé selon l'une des revendications 1 à 12,
**caractérisé en ce que**
dans le procédé d'analyse de la sécurité d'approvisionnement en air comprimé, des scénarios $S_{1(t)}$, $S_{2(t)}$, ... qui décrivent dans une allure temporelle spécifiée en particulier

- la panne d'un ou de plusieurs générateurs d'air comprimé, et/ou
- une extension prospective d'une consommation future d'air comprimé, par exemple par raccordement de consommateurs supplémentaires au réseau d'air comprimé (9), et/ou
- la survenance de pics de consommation d'air comprimé à certains moments ou sur certaines périodes,

sont pris en compte.

**15.** Procédé selon l'une des revendications 1 à 13,
**caractérisé en ce que**
lors de l'analyse de la sécurité d'approvisionnement en air comprimé, des temps de réaction des générateurs d'air comprimé ($C_1$, $C_2$, ...), en particulier des temps de mise en circuit, sont pris en compte.

**16.** Procédé selon l'une des revendications 1 à 14,
**caractérisé en ce que**
dans une routine de planification d'échéances d'entretien sur la base de l'analyse de la sécurité d'approvisionnement en air comprimé, une planification automatique d'échéances d'entretien permettant d'éviter un risque pour la sécurité d'approvisionnement en air comprimé est déterminée, et sachant que, dans la routine de planification d'échéances d'entretien, il est vérifié en particulier si un entretien de l'installation d'air comprimé peut avoir lieu dans une période déterminée sans risque pour la sécurité d'approvisionnement en air comprimé.

**17.** Procédé selon la revendication 15,
**caractérisé en ce que**
dans la routine de planification d'échéances d'entretien, l'intervalle de temps $\Delta t_w$ requis pour l'entretien (durée de la mesure d'entretien) est également pris en compte.

**18.** Procédé selon l'une des revendications 1 à 16,
**caractérisé en ce que**
comme résultat de l'analyse de la sécurité d'approvisionnement en air comprimé, des mesures qui réduisent et/ou éliminent le risque pour la sécurité d'approvisionnement en air comprimé sont déterminées/émises.

**19.** Procédé selon l'une des revendications 1 à 17, en particulier selon la revendication 9,
**caractérisé en ce que**
en cas de risque pour la sécurité d'approvisionnement en air comprimé, des mesures visant à augmenter le débit volumétrique de fourniture DVF(t) sont prises, en particulier automatiquement, et de ce fait la pression dans le réseau d'air comprimé est relevée ou une quantité supplémentaire d'air comprimé est injectée dans le volume tampon.

**20.** Procédé selon l'une des revendications 1 à 18,
**caractérisé en ce que**
comme résultat de l'analyse de la sécurité d'approvisionnement en air comprimé, un degré de réserve et/ou une réserve de l'installation d'air comprimé sont déterminés et/ou affichés, en particulier émis comme rapport et/ou affichés sur un panneau d'affichage.

**21.** Procédé de commande d'une installation d'air comprimé, sachant que le procédé de commande de l'installation d'air comprimé comprend en même temps un procédé d'analyse de la sécurité d'approvisionnement en air comprimé, en particulier selon l'une des revendications 1 à 19, sachant que l'installation d'air comprimé comprend un ou plusieurs générateurs d'air comprimé ($C_1$, $C_2$, ...) et alimente un ou plusieurs consommateurs d'air comprimé via un réseau d'air comprimé (9),

**caractérisé en ce que**

- une allure temporelle du débit volumétrique de fourniture maximal MDVF(t) est saisie, estimée ou calculée,
- une allure temporelle du débit volumétrique de consommation CVF(t) est saisie, estimée ou calculée,
- et, pour l'analyse de la sécurité d'approvisionnement en air comprimé, l'allure temporelle du débit volumétrique de fourniture maximal MDVF(t) et l'allure temporelle du débit volumétrique de consommation CVF(t) sont compensées l'une par rapport à l'autre sur une période d'analyse,

sachant que la commande de l'installation d'air comprimé augmente le débit volumétrique de fourniture DVF(t) lorsqu'un risque existe pour la sécurité d'approvisionnement en air comprimé et refoule de ce fait, en augmentant la pression de réseau p(t), une quantité supplémentaire d'air comprimé dans le volume tampon effectif afin d'augmenter une réserve.

Fig. 1

Fig. 2

Fig. 3

**Fig. 4**

EP 3 236 328 B1

**Fig. 5**

EP 3 236 328 B1

Fig. 6

27

**Fig. 7**

**Fig. 8**

EP 3 236 328 B1

**Fig. 9**

EP 3 236 328 B1

**Fig. 10**

**Fig. 11 (Stand der Technik)**

Liefervolumenstrom C4 — C4

Liefervolumenstrom C3 — C3

Liefervolumenstrom C2 — C2

Liefervolumenstrom C1 — C1

$L_{MAX, gesamt}$

$L_{Max, szen}$

$L_{MIN}$

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011012558
- EP 09799353 A
- EP 14712233 A
- EP 14710264 A